(19) **Europäisches Patentamt / European Patent Office / Office européen des brevets**

(11) **EP 4 783 653 A1**

(12) # EUROPEAN PATENT APPLICATION
published in accordance with Art. 153(4) EPC

(43) Date of publication:
29.07.2026 Bulletin 2026/31

(21) Application number: 24884425.0

(22) Date of filing: 15.10.2024

(51) International Patent Classification (IPC):
$H04W\ 24/08^{(2009.01)}$ $H04W\ 24/04^{(2009.01)}$
$H04W\ 72/1268^{(2023.01)}$ $H04W\ 72/21^{(2023.01)}$

(52) Cooperative Patent Classification (CPC):
H04W 24/04; H04W 24/08; H04W 72/1268;
H04W 72/21

(86) International application number:
PCT/CN2024/125057

(87) International publication number:
WO 2025/092421 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.10.2023 CN 202311435808

(71) Applicant: HUAWEI TECHNOLOGIES CO., LTD.
Shenzhen 518129 (CN)

(72) Inventors:
• FU, Yu
Shenzhen, Guangdong 518129 (CN)
• QIN, Yi
Shenzhen, Guangdong 518129 (CN)
• CAO, Youlong
Shenzhen, Guangdong 518129 (CN)
• XU, Rui
Shenzhen, Guangdong 518129 (CN)
• PANG, Xu
Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHOD AND APPARATUS BASED ON CONFIGURED GRANT CONFIGURATION AND INTER-FREQUENCY MEASUREMENT CONFIGURATION**

(57) This application provides a communication method and apparatus based on a configured grant configuration and an inter-frequency measurement configuration, to reduce a service transmission delay when an SPS transmission occasion collides and/or a CG transmission occasion collides with an MG. In this method, an access network device may send first configuration information and second configuration information to a terminal. The first configuration information is used to configure a first CG transmission occasion and a first time offset, and the second configuration information is used to configure a measurement occasion for inter-frequency measurement. The terminal and the access network device can perform transmission of uplink data on a second CG transmission occasion when the first CG transmission occasion overlaps the measurement occasion in time domain. A time interval between the second CG transmission occasion and the first CG transmission occasion may be the first time offset configured by the access network device. Therefore, when the first CG transmission occasion overlaps the measurement occasion in time domain, transmission of uplink information can be performed in a timely manner on the second CG transmission occasion, to reduce the service transmission delay.

```
┌─────────────────┐                              ┌──────────────┐
│ Access network  │                              │   Terminal   │
│     device      │                              │              │
└─────────────────┘                              └──────────────┘
```

**S201: Third configuration information and second configuration information, where the third configuration information is used to configure a third CG transmission occasion, and the second configuration information is used to configure a measurement occasion**

**S202: When the third CG transmission occasion overlaps the measurement occasion in time domain, send uplink information on a fourth CG transmission occasion, where a time interval between the fourth CG transmission occasion and the third CG transmission occasion is related to a length or an end position of the measurement occasion**

FIG. 5

**Description**

CROSS-REFERENCE TO RELATED APPLICATIONS

This application claims priority to Chinese Patent Application No. 202311435808.8, filed with the China National Intellectual Property Administration on October 30, 2023 and entitled "COMMUNICATION METHOD AND APPARATUS BASED ON CONFIGURED GRANT CONFIGURATION AND INTER-FREQUENCY MEASUREMENT CONFIGURATION", which is incorporated herein by reference in its entirety.

TECHNICAL FIELD

This application relates to the field of mobile communication technologies, and in particular, to a communication method and apparatus based on a configured grant configuration and an inter-frequency measurement configuration.

BACKGROUND

With continuous development of a wireless communication system, a data transmission delay is continuously reduced, and a transmission capacity becomes increasingly greater. The wireless communication system gradually penetrates into some services with high real-time performance and high data capacity requirements, such as video transmission, cloud gaming, and extended reality (extended reality, XR). The XR creates a human-computer interaction environment that combines a real world and a virtual world by using computer technologies and wearable devices; and is a collective term of augmented reality (augmented reality, AR), virtual reality (virtual reality, VR), and the like.
The cloud gaming service and the XR service generally feature periodic transmission. Therefore, a semi-persistent scheduling (semi-persistent scheduling, SPS) manner may be usually used when downlink service data is transmitted, and a configured grant (configured grant, CG) manner may be usually used when uplink service data is transmitted. Currently, when an SPS transmission occasion collides and/or a CG transmission occasion collides with a measurement gap (measurement gap, MG), a service transmission delay may increase, and service performance may be affected.

SUMMARY

This application provides a communication method and apparatus based on a configured grant configuration and an inter-frequency measurement configuration, to reduce a service transmission delay when an SPS transmission occasion collides and/or a CG transmission occasion collides with an MG.
According to a first aspect, a communication method is provided. The method may be implemented by a first communication apparatus. The first communication apparatus may be a terminal device, or may be a component in the terminal device, for example, referred to as a terminal apparatus. The component in this application may include, for example, at least one of functional modules such as a chip, a chip system, a processor, a transceiver, a processing unit, or an interface unit. The method may alternatively be implemented by a logical node, a logical module, or software that can implement all or a part of functions of the terminal device. An example in which an execution body is a terminal is used. The method may be implemented by using the following steps: The terminal receives first configuration information and second configuration information from an access network device, where the first configuration information is used to configure a first CG transmission occasion and a first time offset, the second configuration information is used to configure a measurement occasion, and the measurement occasion is used for inter-frequency measurement; and when the first CG transmission occasion overlaps the measurement occasion in time domain, the terminal sends uplink information to the access network device on a second CG transmission occasion, where a time interval between the second CG transmission occasion and the first CG transmission occasion is equal to the first time offset.
According to the method shown in the first aspect, the terminal and the access network device may perform transmission of the uplink data on the second CG transmission occasion when the first CG transmission occasion overlaps the measurement occasion in time domain. The time interval between the second CG transmission occasion and the first CG transmission occasion may be the first time offset configured by the access network device. Therefore, when the first CG transmission occasion overlaps the measurement occasion in time domain, the transmission of the uplink information may be performed in a timely manner on the second CG transmission occasion, to reduce a service transmission delay.
According to a second aspect, a communication method is provided. The method may be implemented by a second communication apparatus. In this application, the second communication apparatus may be an access network device, or may be a component in the access network device, for example, referred to as an access network apparatus. The access network device is, for example, a base station. The method may alternatively be implemented by a logical node, a logical module, or software that can implement all or a part of functions of the access network device. An example in which an execution body is an access network device is used. The method may be implemented by using the following steps: The access network device sends first configuration information and second configuration information to a terminal device, where the first configuration information is used to configure a first configured grant CG transmission occasion and a first time offset, the second configuration information is used to configure a measurement occasion, and the measurement occasion is used for inter-frequency measurement; and when the first CG transmission occasion overlaps the measurement occasion in time domain, receives uplink information from the terminal device on a second CG transmission occasion, where a time interval between the second CG transmission occasion and the first CG transmission occasion is equal to the first time offset.

For beneficial effects of the method shown in the second aspect, refer to the beneficial effects of the first aspect.

In a possible implementation of the first aspect or the second aspect, a length of the first time offset is greater than or equal to a length of the measurement occasion. According to this implementation, it can be ensured that a time domain position of the second CG transmission occasion is after a time domain position of the measurement occasion, to avoid a case in which the second CG transmission occasion overlaps the measurement occasion.

In a possible implementation of the first aspect or the second aspect, the length of the first time offset is less than or equal to a length of a time interval between an end position of a CG periodicity time period that the first CG transmission occasion is in and an end position of the first CG transmission occasion. According to this implementation, it can be ensured that the second CG transmission occasion and the first CG transmission occasion are in the same CG periodicity time period, to reduce an uplink delay.

In a possible implementation of the first aspect or the second aspect, the first CG transmission occasion includes N1 CG transmission occasions, and N1 is a positive integer greater than 1; and at least K1 CG transmission occasions in the first CG transmission occasion overlap the measurement occasion in time domain.

According to this implementation, K1 may be used as a threshold. When a quantity of CG transmission occasions that overlap the measurement occasion and that are in the N1 CG transmission occasions included in the first CG transmission occasion is at least K1, the terminal and the access network device may perform transmission of the uplink information on the second CG transmission occasion. When the quantity is less than K1, the uplink information may still be transmitted based on N1-K1 CG transmission occasions that do not overlap the measurement occasion and that are in the first CG transmission occasion. In this case, delay impact of the measurement occasion on service transmission is limited. Compared with sending the uplink information by using the second CG transmission occasion, transmitting the uplink information by using the N1-K1 CG transmission occasions can reduce a transmission delay and reduce system complexity.

In a possible implementation of the first aspect or the second aspect, the first configuration information is further used to configure K1 or a proportion of the K1 CG transmission occasions in the N1 CG transmission occasions. According to this implementation, the access network device may configure the K1 threshold by using the first configuration information. A configuration manner of the K1 threshold may be directly configuring K1, or may be configuring the proportion, for example, configuring a value of K1/N1. "/" herein represents a division operation.

In a possible implementation of the first aspect or the second aspect, a logical channel used to carry the uplink information is a high-priority logical channel. According to this implementation, in a transmission process for the high-priority logical channel, when the first CG transmission occasion overlaps the measurement occasion in time domain, the uplink information may be sent on the second CG transmission occasion, so that a service delay of the high-priority logical channel can be reduced. The method in this application may not be used in transmission of a low-priority logical channel, to reduce complexity, and preferentially ensure transmission performance of a service with high importance when resources are limited.

According to a third aspect, a communication method is provided. The method may be implemented by a first communication apparatus. The first communication apparatus may be a terminal device, or may be a component in the terminal device, for example, referred to as a terminal apparatus. The method may alternatively be implemented by a logical node, a logical module, or software that can implement all or a part of functions of the terminal device. An example in which an execution body is a terminal is used. The method may be implemented by using the following steps: The terminal receives third configuration information and second configuration information from an access network device, where the third configuration information is used to configure a third CG transmission occasion, the second configuration information is used to configure a measurement occasion, and the measurement occasion is used for inter-frequency measurement; and when the third CG transmission occasion overlaps the measurement occasion in time domain, the terminal may send uplink information to the access network device on a fourth CG transmission occasion, where a time interval between the fourth CG transmission occasion and the third CG transmission occasion is related to a length or an end position of the measurement occasion.

According to the method shown in the third aspect, the terminal and the access network device may perform transmission of the uplink information on the fourth CG transmission occasion when the third CG transmission occasion overlaps the measurement occasion in time domain. The time interval between the fourth CG transmission occasion and the third CG transmission occasion may be determined based on the length or the end position of the measurement occasion. Therefore, when the third CG transmission occasion overlaps the measurement occasion in time domain, the transmission of the uplink information may be performed in a timely manner on the fourth CG transmission occasion, to reduce a service transmission delay.

According to a fourth aspect, a communication method is provided. The method may be implemented by a second communication apparatus. In this application, the second communication apparatus may be an access network device, or may be a component in the access network device, for example, referred to as an access network apparatus. The method may alternatively be implemented by a logical node, a logical module, or software that can implement all or a part of functions of the access network device. An example in which an execution body is the access network device is used. The method may be implemented by using the following steps: The access network device sends third configuration information and second configuration information to a terminal device, where the third configuration information is used to configure a third CG transmission occasion, the second configuration information is used to configure a measurement occasion, and the measurement occasion is used for inter-frequency measurement; and when the third CG transmission occasion overlaps the measurement occasion in time domain, the access network device receives uplink information from the terminal device on a fourth CG transmission occasion, where a time interval between the fourth CG transmission occasion and the third CG transmission occasion is related to a length or an end position of the measurement occasion.

For beneficial effects of the method shown in the fourth aspect, refer to beneficial effects of the third aspect.

In a possible implementation of the third aspect or the fourth aspect, the third CG transmission occasion and the fourth CG transmission occasion are in a same CG periodicity time period. According to this implementation, it can be ensured that the fourth CG transmission occasion and the third CG transmission occasion are in the same CG periodicity time period, to reduce an uplink delay.

In a possible implementation of the third aspect or the fourth aspect, a start position of the fourth CG transmission occasion is related to a time interval between the end position of the measurement occasion and a start position of the third CG transmission occasion. According to this implementation, the start position of the fourth CG transmission occasion may be determined based on the time interval between the end position of the measurement occasion and the start position of the third CG transmission occasion, so that the fourth CG transmission occasion can be properly determined, to help reduce a transmission delay.

In a possible implementation of the third aspect or the fourth aspect, the start position of the fourth CG transmission occasion is related to the end position of the measurement occasion. According to this implementation, the start position of the fourth CG transmission occasion may be determined based on the end position of the measurement occasion, so that the fourth CG transmission occasion can be properly determined, to help reduce a transmission delay.

In a possible implementation of the third aspect or the fourth aspect, a length of the time interval is greater than or equal to the length of the measurement occasion. According to this implementation, it can be ensured that the time domain position of the fourth CG transmission occasion is after the time domain position of the measurement occasion, to avoid a case in which the fourth CG transmission occasion overlaps the measurement occasion.

In a possible implementation of the third aspect or the fourth aspect, the length of the time interval is less than or equal to a length of a time interval between an end position of the CG periodicity time period that the third CG transmission occasion is in and an end position of the third CG transmission occasion. According to this implementation, it can be further ensured that the fourth CG transmission occasion and the third CG transmission occasion are in the same CG periodicity time period, to reduce an uplink delay.

In a possible implementation of the third aspect or the fourth aspect, the third CG transmission occasion includes N2 CG transmission occasions, and N2 is a positive integer greater than 1; and at least K2 CG transmission occasions in the third CG transmission occasion overlap the measurement occasion in time domain.

According to this implementation, K2 may be used as a threshold. When a quantity of CG transmission occasions that overlap the measurement occasion and that are in the N2 CG transmission occasions included in the third CG transmission occasion is at least K2, the terminal and the access network device may perform transmission of the uplink information on the fourth CG transmission occasion. When the quantity is less than K2, the uplink information may still be transmitted based on N2-K2 CG transmission occasions that do not overlap the measurement occasion and that are in the third CG transmission occasion. In this case, delay impact of the measurement occasion on service transmission is limited. Compared with sending the uplink information by using the fourth CG transmission occasion, transmitting the uplink information by using the N2-K2 CG transmission occasions can reduce a transmission delay and reduce system complexity.

In a possible implementation of the third aspect or the fourth aspect, the third configuration information is further used to configure K2 or a proportion of the K2 CG transmission occasions in the N2 CG transmission occasions. According to this implementation, the access network device may configure the K2 threshold by using the third configuration information. A configuration manner of the K2 threshold may be directly configuring K2, or may be configuring the proportion, for example, configuring a value of K2/N2.

In a possible implementation of the third aspect or the fourth aspect, a logical channel used to carry the uplink information is a high-priority logical channel. According to this implementation, in a transmission process for the high-priority logical channel, when the third CG transmission occasion overlaps the measurement occasion in time domain, the uplink information may be sent on the fourth CG transmission occasion, so that a service delay of the high-priority logical channel can be reduced. The method in this application may not be used in transmission of a low-priority logical channel, to reduce complexity, and preferentially ensure transmission performance of a service with high importance when resources are limited.

According to a fifth aspect, a communication method is provided. The method may be implemented by a first communication apparatus. The first communication apparatus may be a terminal device, or may be a component in the terminal device, for example, referred to as a terminal apparatus. The method may alternatively be implemented by a logical node, a logical module, or software that can implement all or a part of functions of the terminal device. An example in which an execution body is a terminal is used. The method may be implemented by using the following steps: The terminal receives fourth configuration information and second configuration information from an access network device, where the fourth configuration information is used to configure a first SPS transmission occasion and a second time offset, the second configuration information is used to configure a measurement occasion, and the measurement occasion is used for inter-frequency measurement; and when the first SPS transmission occasion overlaps the measurement occasion in time domain, the terminal may receive downlink information from the access network device on a second SPS transmission occasion, where a time interval between the second SPS transmission occasion and the first SPS transmission occasion is equal to the second time offset.

According to the method shown in the fifth aspect, the terminal and the access network device may perform transmission of uplink data on the second SPS transmission occasion when the first SPS transmission occasion overlaps the measurement occasion in time domain. The time interval between the second SPS transmission occasion and the first SPS transmission occasion may be a first time offset configured by the access network device. Therefore, when the first SPS transmission occasion overlaps the measurement occasion in time domain, transmission of uplink information may be performed in a timely manner on the second SPS transmission occasion, to reduce a service transmission delay.

According to a sixth aspect, a communication method is provided. The method may be implemented by a second communication apparatus. In this application, the second communication apparatus may be an access network device, or may be a component in the access network device, for example, referred to as an access network apparatus. The method may alternatively be implemented by a logical node, a logical module, or software that can implement all or a part of functions of the access network device. An example in which an execution body is an access network device is used. The method may be implemented by using the following steps: The access network device sends fourth configuration information and second configuration information to a terminal device, where the fourth configuration information is used to configure a first semi-persistent scheduling SPS transmission occasion and a second time offset, the second configuration information is used to configure a measurement occasion, and the measurement occasion is used for inter-frequency measurement; and when the first SPS transmission occasion overlaps the measurement occasion in time domain, the access network device may send downlink information to the terminal device on a second SPS transmission occasion, where a time interval between the second SPS transmission occasion and the first SPS transmission occasion is equal to the second time offset.

For beneficial effects of the method shown in the sixth aspect, refer to the beneficial effects of the fifth aspect.

In a possible implementation of the fifth aspect or the sixth aspect, a length of the second time offset is greater than or equal to a length of the measurement occasion. According to this implementation, it can be ensured that a time domain position of the second SPS transmission occasion is after a time domain position of the measurement occasion, to avoid a case in which the second SPS transmission occasion overlaps the measurement occasion.

In a possible implementation of the fifth aspect or the sixth aspect, the length of the second time offset is less than or equal to a length of a time interval between an end position of an SPS periodicity time period that the first SPS transmission occasion is in and an end position of the first SPS transmission occasion. According to this implementation, it can be ensured that the second SPS transmission occasion and the first SPS transmission occasion are in the same SPS periodicity time period, to reduce an uplink delay.

In a possible implementation of the fifth aspect or the sixth aspect, the first SPS transmission occasion includes N3 SPS transmission occasions, and N3 is a positive integer greater than 1; and at least K3 SPS transmission occasions in the first SPS transmission occasion overlap the measurement occasion in time domain. According to this implementation, K3 may be used as a threshold. When a quantity of SPS transmission occasions that overlap the measurement occasion and that are in the N3 SPS transmission occasions included in the first SPS transmission occasion is at least K3, the terminal and the access network device may perform transmission of the downlink information on the second SPS transmission occasion. When the quantity is less than K3, the downlink information may still be transmitted based on N3-K3 SPS transmission occasions that do not overlap the measurement occasion and that are in the first SPS transmission occasion. In this case, delay impact of the measurement occasion on service transmission is limited. Compared with sending the downlink information by using the second SPS transmission occasion, transmitting the downlink information by using the N3-K3 SPS transmission occasions can reduce a transmission delay and reduce system complexity.

In a possible implementation of the fifth aspect or the sixth aspect, the first configuration information is further used to configure K3 or a proportion of the K3 SPS transmission occasions in the N3 SPS transmission occasions. According to this implementation, the access network device may configure the K3 threshold by using the first configuration information. A configuration manner of the K3 threshold may be directly configuring K3, or may be configuring the proportion, for example, configuring a value of K3/N3.

In a possible implementation of the fifth aspect or the sixth aspect, a logical channel used to carry the downlink information is a high-priority logical channel. According to this implementation, in a transmission process for the high-priority logical channel, when the first SPS transmission occasion overlaps the measurement occasion in time domain, the downlink information may be sent on the second SPS transmission occasion, so that a service delay of the high-priority logical channel can be reduced. The method in this application may not be used in transmission of a low-priority logical channel, to reduce complexity, and preferentially ensure transmission performance of a service with high importance when resources are limited.

According to a seventh aspect, a communication method is provided. The method may be implemented by a first communication apparatus. The first communication apparatus may be a terminal device, or may be a component in the terminal device, for example, referred to as a terminal apparatus. The method may alternatively be implemented by a logical node, a logical module, or software that can implement all or a part of functions of the terminal device. An example in which an execution body is a terminal is used. The method may be implemented by using the following steps: The terminal receives fifth configuration information and second configuration information from an access network device, where third configuration information is used to configure a third SPS transmission occasion, the second configuration information is used to configure a measurement occasion, and the measurement occasion is used for inter-frequency measurement; and when the third SPS transmission occasion overlaps the measurement occasion in time domain, the terminal may receive downlink information from the access network device on a fourth SPS transmission occasion, where a time interval between the fourth SPS transmission occasion and the third SPS transmission occasion is related to a length or an end position of the measurement occasion.

According to the method shown in the seventh aspect, the terminal and the access network device may perform transmission of the downlink information on the fourth SPS transmission occasion when the third SPS transmission occasion overlaps the measurement occasion in time domain. The time interval between the fourth SPS transmission occasion and the third SPS transmission occasion may be determined based on the length or the end position of the measurement occasion. Therefore, when the third SPS transmission occasion overlaps the measurement occasion in time domain, the transmission of the downlink information may be performed in a timely manner on the fourth SPS transmission occasion, to reduce a service transmission delay.

According to an eighth aspect, a communication method is provided. The method may be implemented by a second communication apparatus. In this application, the second communication apparatus may be an access network device, or may be a component in the access network device, for example, referred to as an access network apparatus. The method may alternatively be implemented by a logical node, a logical module, or software that can implement all or a part of functions of the access network device. An example in which an execution body is the access network device is used. The method may be implemented by using the following steps: The access network device sends fifth configuration information and second configuration information to a terminal device, where third configuration information is used to configure a third SPS transmission occasion, the second configuration information is used to configure a measurement occasion, and the measurement occasion is used for inter-frequency measurement; and when the third SPS transmission occasion overlaps the measurement occasion in time domain, the access network device may send downlink information to the terminal device on a fourth SPS transmission occasion, where a time interval between the fourth SPS transmission occasion and the third SPS transmission occasion is related to a length or an end position of the measurement occasion.

For beneficial effects of the method shown in the eighth aspect, refer to the beneficial effects of the seventh aspect.

In a possible implementation of the seventh aspect or the eighth aspect, the third SPS transmission occasion and the fourth SPS transmission occasion are in a same SPS periodicity time period. According to this implementation, it can be ensured that the fourth SPS transmission occasion and the third SPS transmission occasion are in a same CG periodicity time period, to reduce an uplink delay.

In a possible implementation of the seventh aspect or the eighth aspect, a start position of the fourth SPS transmission occasion is related to a time interval between the end position of the measurement occasion and a start position of the third SPS transmission occasion. According to this implementation, the start position of the fourth SPS transmission occasion may be determined based on the time interval between the end position of the measurement occasion and the start position of the third SPS transmission occasion, so that the fourth SPS transmission occasion can be properly determined, to help reduce a transmission delay.

In a possible implementation of the seventh aspect or the eighth aspect, the start position of the fourth SPS transmission occasion is related to the end position of the measurement occasion. According to this implementation, the start position of the fourth SPS transmission occasion may be determined based on the end position of the measurement occasion, so that the fourth SPS transmission occasion can be properly determined, to help reduce a transmission delay.

In a possible implementation of the seventh aspect or the eighth aspect, a length of the time interval is greater than or equal to the length of the measurement occasion. According to this implementation, it can be ensured that a time domain position of the fourth SPS transmission occasion is after a time domain position of the measurement occasion, to avoid a case in which the fourth SPS transmission occasion overlaps the measurement occasion.

In a possible implementation of the seventh aspect or the eighth aspect, the length of the time interval is less than or equal to a length of a time interval between an end position of the SPS periodicity time period that the third SPS transmission occasion is in and an end position of the third SPS transmission occasion. According to this implementation, it can be further ensured that the fourth SPS transmission occasion and the third SPS transmission occasion are in the same SPS periodicity time period, to reduce an uplink delay.

In a possible implementation of the seventh aspect or the eighth aspect, the third SPS transmission occasion includes N4 SPS transmission occasions, and N4 is a positive integer greater than 1; and at least K4 SPS transmission occasions in the third SPS transmission occasion overlap the measurement occasion in time domain. According to this implementation, K4 may be used as a threshold. When a quantity of SPS transmission occasions that overlap the measurement occasion and that are in the N4 SPS transmission occasions included in the third SPS transmission occasion is at least K4, the terminal and the access network device may perform transmission of the downlink information on the fourth SPS transmission occasion. When the quantity is less than K4, the downlink information may still be transmitted based on N4-K4 SPS transmission occasions that do not overlap the measurement occasion and that are in the third SPS transmission occasion. In this case, delay impact of the measurement occasion on service transmission is limited. Compared with sending the downlink information by using the fourth SPS transmission occasion, transmitting the downlink information by using the N4-K4 SPS transmission occasions can reduce a transmission delay and reduce system complexity.

In a possible implementation of the seventh aspect or the eighth aspect, the third configuration information is further used to configure K4 or a proportion of the K4 SPS transmission occasions in the N4 SPS transmission occasions. According to this implementation, the access network device may configure the K4 threshold by using the third configuration information. A configuration manner of the K4 threshold may be directly configuring K4, or may be configuring the proportion, for example, configuring a value of K4/N4.

In a possible implementation of the seventh aspect or the eighth aspect, a logical channel used to carry the downlink information is a high-priority logical channel. According to this implementation, in a transmission process for the high-priority logical channel, when a third CG transmission occasion overlaps the measurement occasion in time domain, uplink information may be sent on a fourth CG transmission occasion, so that a service delay of the high-priority logical channel can be reduced. The method in this application may not be used in transmission of a low-priority logical channel, to reduce complexity, and preferentially ensure transmission performance of a service with high importance when resources are limited.

According to a ninth aspect, a communication apparatus is provided. The communication apparatus can implement the method in the first aspect, the third aspect, or the fifth aspect. For example, the apparatus includes a corresponding means (means) for performing the first aspect, the third aspect, or the fifth aspect. The communication apparatus may be implemented by hardware, implemented by software, or implemented by hardware executing corresponding software.

In a design, the communication apparatus includes a unit for performing any one of the first aspect, the third aspect, or the fifth aspect.

In a design, the communication apparatus includes a processor, and the processor is configured to perform the method in the first aspect, the third aspect, or the fifth aspect.

In a design, the communication apparatus includes a processor and an interface circuit. The interface circuit is configured to receive a signal from another apparatus other than the apparatus and transmit the signal to the processor, or send the signal from the processor to another apparatus other than the apparatus. The processor is configured to implement the method in the first aspect, the third aspect, or the fifth aspect by using a logic circuit or executing code instructions.

In a design, the communication apparatus includes a processor and a memory. The processor is configured to execute a computer program or instructions stored in the memory, to enable the apparatus to implement the method in the first aspect, the third aspect, or the fifth aspect.

In a design, the apparatus may be a first communication apparatus, or may be a module or unit (for example, a chip, a chip system, or a circuit) that is in the first communication apparatus and that is in one-to-one correspondence with the method/operation/step/action described in the first aspect, the third aspect, or the fifth aspect, or can be used in a matching manner with the communication apparatus. For example, the first communication apparatus may be a terminal device, or may be a component in the terminal device, for example, referred to as a terminal apparatus. The first communication apparatus may alternatively be implemented by a logical node, a logical module, or software that can implement all or a part of functions of the terminal device.

According to a tenth aspect, a communication apparatus is provided. The communication apparatus can implement the method in the second aspect, the fourth aspect, or the sixth aspect. For example, the apparatus includes a corresponding means for performing the second aspect, the fourth aspect, or the sixth aspect. The communication apparatus may be implemented by hardware, implemented by software, or implemented by hardware executing corresponding software.

In a design, the communication apparatus includes a unit for performing the second aspect, the fourth aspect, or the sixth aspect.

In a design, the communication apparatus includes a processor, and the processor is configured to perform the method in the second aspect, the fourth aspect, or the sixth aspect.

In a design, the communication apparatus includes a processor and an interface circuit. The interface circuit is configured to receive a signal from another apparatus other than the apparatus and transmit the signal to the processor, or send the signal from the processor to another apparatus other than the apparatus. The processor is configured to implement the method in the second aspect, the fourth aspect, or the sixth aspect by using a logic circuit or executing code instructions.

In a design, the communication apparatus includes a processor and a memory. The processor is configured to execute a computer program or instructions stored in the memory, to enable the apparatus to implement the method in the second aspect, the fourth aspect, or the sixth aspect.

In a design, the apparatus may be a second communication apparatus, or may be a module or unit (for example, a chip, a chip system, or a circuit) that is in the second communication apparatus and that is in one-to-one correspondence with the method/operation/step/action described in the second aspect, the fourth aspect, or the sixth aspect, or can be used in a matching manner with the communication apparatus. For example, the second communication apparatus may be an access network device, or may be a component in the access network device, for example, referred to as an access network apparatus. The second communication apparatus may alternatively be implemented by a logical node, a logical module, or software that can implement all or a part of functions of the access network device.

According to an eleventh aspect, a computer-readable storage medium is provided. The computer-readable storage medium is configured to store a computer program or instructions, and when the computer program or the instructions are run, the method in any one of the first aspect to the eighth aspect and the possible implementations of the first aspect to the eighth aspect is implemented.

According to a twelfth aspect, a computer program product including instructions is provided. The computer program product may be a computer program or instructions, and when the computer program or the instructions are run by a computer, the method in any one of the first aspect to the eighth aspect and the possible implementations of the first aspect to the eighth aspect is performed.

According to a thirteenth aspect, an embodiment of this application further provides a communication apparatus, to perform the method in any one of the first aspect to the eighth aspect and the possible implementations of the first aspect to the eighth aspect.

According to a fourteenth aspect, a chip or a chip system is provided. The chip or the chip system includes a logic circuit (or it is alternatively understood as that the chip or the chip system includes a processor, and the processor may include the logic circuit and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message. The logic circuit may be configured to perform an operation other than the transceiver function in the method in any one of the first aspect to the eighth aspect and the possible implementations of the first aspect to the eighth aspect. The logic circuit may be further configured to transmit a message to the input/output interface, or receive a message from another communication apparatus through the input/output interface. The chip system may be configured to implement the method in any one of the first aspect to the eighth aspect and the possible implementations of the first aspect to the eighth aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a fifteenth aspect, a communication method is provided. The communication method may include the method implemented by the terminal device shown in any one of the first aspect and the possible implementations of the first aspect and the method implemented by the access network device shown in any one of the second aspect and the possible implementations of the second aspect, or include the method implemented by the terminal device shown in any one of the third aspect and the possible implementations of the third aspect and the method implemented by the access network device shown in any one of the fourth aspect and the possible implementations of the fourth aspect, or include the method implemented by the terminal device shown in any one of the fifth aspect and the possible implementations of the fifth aspect and the method implemented by the access network device shown in any one of the sixth aspect and the possible implementations of the sixth aspect, or include the method implemented by the terminal device shown in any one of the seventh aspect and the possible implementations of the seventh aspect and the method implemented by the access network device shown in any one of the eighth aspect and the possible implementations of the eighth aspect.

According to a sixteenth aspect, a communication system is provided. The communication system may include a first communication apparatus and a second communication apparatus. The first communication apparatus may be configured to implement the method shown in any one of the first aspect and the possible implementations of the first aspect, and the second communication apparatus may be configured to implement the method shown in any one of the second aspect and the possible implementations of the second aspect. Alternatively, the first communication apparatus may be configured to implement the method shown in any one of the third aspect and the possible implementations of the third aspect, and the second communication apparatus may be configured to implement the method shown in any one of the fourth aspect and the possible implementations of the fourth aspect. Alternatively, the first communication apparatus may be configured to implement the method shown in any one of the fifth aspect and the possible implementations of the fifth aspect, and the second communication apparatus may be configured to implement the method shown in any one of the sixth aspect and the possible implementations of the sixth aspect. Alternatively, the first communication apparatus may be configured to implement the method shown in any one of the seventh aspect and the possible implementations of the seventh aspect, and the second communication apparatus may be configured to implement the method shown in any one of the eighth aspect and the possible implementations of the eighth aspect.

For technical effects brought by the ninth aspect to the sixteenth aspect, refer to descriptions of beneficial effects of corresponding implementations in the first aspect to the eighth aspect. Details are not described herein again.

BRIEF DESCRIPTION OF DRAWINGS

FIG. 1 is a diagram of an architecture of a wireless communication system according to an embodiment of this application;
FIG. 2 is a diagram of a position relationship between a CG transmission occasion and a measurement occasion according to an embodiment of this application;
FIG. 3 is a schematic flowchart of a communication method according to an embodiment of this application;
FIG. 4 is a diagram of a time domain position of a second CG transmission occasion according to an embodiment of this application;
FIG. 5 to FIG. 7 are schematic flowcharts of several other communication methods according to embodiments of this application; and
FIG. 8 and FIG. 9 are diagrams of structures of communication apparatuses according to an embodiment of this application.

DESCRIPTION OF EMBODIMENTS

Embodiments of this application provide a communication method and apparatus based on a configured grant configuration and an inter-frequency measurement configuration. The method and the apparatus are based on a same inventive concept. Because the method and the apparatus have a similar problem-resolving principle, for implementations of the apparatus and the method, refer to each other, and no repeated description is provided.

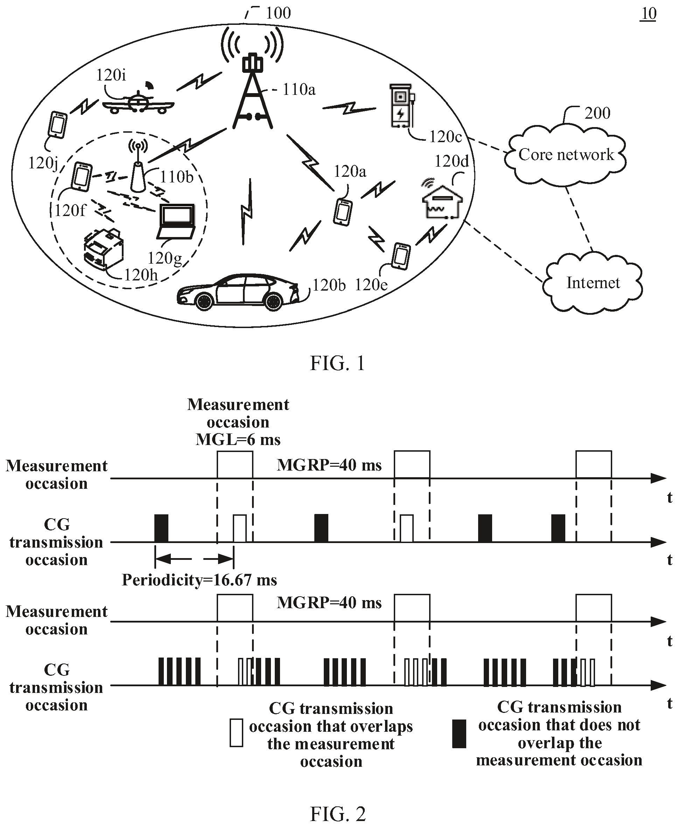

FIG. 1 is a diagram of a possible and non-limiting system. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as a terminal 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative to each other. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. The RAN node 110 and the terminal 120 are sometimes referred to as communication apparatuses. For example, the network element 110a and the network element 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), new radio (new radio, NR), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may alternatively be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application. It may be understood that, in an XR scenario, the terminal may be a device like a smartphone, a head-mounted display (head-mounted display, HMD), or smart glasses (such as VR glasses and AR glasses). In a cloud gaming scenario, the terminal may be a device like a smartphone or a tablet computer.

In this application, "sending information to the terminal" may be understood as that a destination end of the information is the terminal, and may include directly or indirectly sending the information to the terminal. "Receiving information from the terminal" may be understood as that a source end of the information is the terminal, and may include directly or indirectly receiving the information from the terminal. Information may undergo necessary processing, for example, a format change, between the source end and the destination end for sending of the information. However, the destination end may understand valid information from the source end. A similar expression in this application may be understood similarly, and details are not described herein again.

The following describes the method provided in this application by using an example in which a terminal and an access network device are used as execution bodies. The terminal may include the foregoing terminal 120. The access network device may include the foregoing RAN node 110. It may be understood that an execution body of the method is not limited in this application. For example, the method performed by the access network device in this application may alternatively be performed by a module (for example, a chip, a chip system, or a processor) of the access network device, or may be implemented by a logical node, a logical module, or software that can implement all or a part of functions of the access network device. The method performed by the terminal in this application may alternatively be performed by a module (for example, a chip, a chip system, or a processor) of the terminal, or may be implemented by a logical node, a logical module, or software that can implement all or a part of functions of the terminal.

Currently, service data of cloud gaming and an XR service usually has a characteristic of periodic transmission. Downlink service data is used as an example. For a video with a frame rate of 60 frames per second (frame per second, FPS), in an ideal case, one picture frame arrives at an interval of 16.67 milliseconds (ms). According to the 3GPP standard, a transmission reliability requirement of an XR video is 99%. In addition, an uplink XR video delay over an air interface is usually 30 ms, and a downlink XR video delay over the air interface is usually 10 ms.

Based on the periodic characteristic of the service data of the cloud gaming and the XR service, the access network device may configure the terminal to transmit uplink data of the cloud gaming and/or the XR service in a CG manner.

A CG means that in an uplink transmission process, an uplink scheduling resource only needs to be allocated or specified once by using radio resource control (radio resource control, RRC) signaling or a physical downlink control channel (physical downlink control channel, PDCCH), and then uplink transmission may be performed by periodically and repeatedly using a same time-frequency resource. The CG includes two types, namely, a type-1 CG and a type-2 CG. In the type-1 CG, a parameter related to CG transmission is configured by using RRC signaling, for example, a configured scheduling radio network temporary identifier (configured scheduling radio network temporary identifier, CS-RNTI), a CG periodicity (periodicity), a CG time domain resource, and a CG frequency domain resource. In addition, in the type-1 CG, the access network device may further activate a corresponding CG periodicity time period by using the RRC signaling. In the type-2 CG, a parameter related to CG transmission, for example, a parameter like the CS-RNTI or the CG periodicity, is configured by using the RRC signaling, and the PDCCH is used to activate a corresponding CG periodicity time period and indicate an allocated CG transmission occasion and CG frequency domain resource. It may be understood that, the CG periodicity time period in this application is a time period whose length is a CG periodicity.

It may be understood that one CG periodicity time period may include one or more CG transmission occasions. In this application, the CG transmission occasion is an uplink resource used for transmission of uplink service data or a PUSCH. The terminal may send the uplink data to the access network device on the CG transmission occasion through the PUSCH. The CG transmission occasion may alternatively be replaced with another possible description, for example, a CG resource, a CG PUSCH, a PUSCH resource, a PUSCH opportunity, a PUSCH occasion, a CG uplink resource, a CG PUSCH resource, or a CG PUSCH transmission resource or transmission occasion.

It is specified in a current protocol that the CG periodicity is an integer multiple of a length of two symbols, a length of seven symbols, or a length of 14 symbols supported by NR. For example, when a subcarrier spacing is 30 kilohertz (kHz), a slot length is 0.5 ms, one slot includes 14 symbols, and a length of the CG periodicity supported by the protocol is two symbols, seven symbols, or (1 to 1280)*14 symbols. In other words, a minimum periodicity length supported by the protocol is 0.5/7 ms, and a maximum periodicity is 640 ms.

For example, a procedure of type-1 CG scheduling is as follows.

1. The access network device configures a parameter related to the CG periodicity time period by using higher layer signaling, including transmission of the CS-RNTI, the CG periodicity, the time domain resource and the frequency domain resource of the CG, and the like. In addition, an access network device base station activates the corresponding CG periodicity time period by using the RRC signaling.

2. A medium access control (medium access control, MAC) entity of the terminal determines, based on a CG configuration, a slot that is periodically effective in the CG periodicity time period. For example, a position of the slot may satisfy the following formula:

[(SFN×numberOfSlotsPerFrame×numberOfSymbolsPerSlot)+(slot number in the frame×numberOfSymbolsPerSlot)+symbol number in the slot]=(timeReferenceSFN×numberOfSlotsPerFrame×numberOfSymbolsPerSlot +timeDomainOff set×numberOfSymbolsPerSlot+S+N×periodicity) modulo (1024×numberOfSlotsPerFrame×-numberOfSymbolsPerSlot).

SFN represents a radio system frame number, numberOfSlotsPerFrame represents a quantity of slots included in a radio system frame, numberOfSymbolsPerSlot represents a quantity of symbols included in the slot, slot number in the frame represents a sequence number of a slot in the radio system frame, symbol number in the slot represents a sequence number of a symbol in the slot, which is a start symbol of the CG periodicity time period in the slot, timeReferenceSFN indicates an offset SFN of the CG transmission occasion in time domain, timeDomainOffset may indicate an offset between a start position of the CG periodicity time period and timeReferenceSFN, S is a time domain parameter configured in the higher layer signaling and represents a current symbol (current_symbol), N represents an $N^{th}$ CG periodicity time period, periodicity represents the CG periodicity, and modulo() represents a modulo operation.

A procedure of type-2 CG scheduling is as follows.

1. The access network device configures parameters related to the CG periodicity time period by using higher layer signaling, where the parameters include parameters such as the CS-RNTI and the CG periodicity, and herein may include a plurality of groups of parameters of CG periodicity time periods. For example, the plurality of groups of parameters of CG periodicity time periods may correspond to different CG periodicities.

2. For uplink data (for example, a PUSCH) transmission, the access network device indicates a specific activated CG periodicity time period (for example, indicates a periodicity of the activated CG periodicity time period) through the PDCCH (for example, downlink control information (downlink control information, DCI) carried on the PDCCH), and may further indicate, by using a resource allocation domain, a CG time domain resource and a CG frequency domain resource that are specifically allocated for CG transmission.

3. The MAC entity determines, based on a CG configuration, a time-domain symbol that is periodically effective in the CG periodicity time period. For example, a position of the time-domain symbol may satisfy the following formula:

[(SFN×numberOfSlotsPerFrame×numberOfSymbolsPerSlot)+(slot number in the frame×numberOfSymbolsPerSlot)+symbol number in the slot]=[(SFNstart time×numberOfSlotsPerFrame×numberOfSymbolsPerSlot+slotstart time×numberOfSymbolsPerSlot+symbolstart time)+N×periodicity] modulo (1024 ×numberOfSlotsPerFrame×numberOfSymbolsPerSlot).

SFNstart time is a radio frame number in which the PUSCH starts to be sent, slotstart time is a slot number in which the PUSCH starts to be sent, and symbolstart time is a symbol in which the PUSCH starts to be sent. For other parameters, refer to the descriptions in the type-1 CG configuration.

For the type-1 CG or the type-2 CG, if a corresponding CG periodicity time period needs to be released, the base station may indicate release of the corresponding CG periodicity time period through the PDCCH (for example, the DCI carried on the PDCCH).

In addition, the access network device may configure the terminal to transmit downlink data of the cloud gaming and/or the XR service in an SPS manner.

SPS means that in a downlink transmission process, a downlink scheduling resource only needs to be allocated or specified once through a PDCCH, and then a same time-frequency resource may be periodically and repeatedly used. In this way, overheads of the PDCCH can be effectively reduced. It is specified in the protocol that parameters related to an SPS periodicity time period are configured by using RRC signaling, for example, parameters such as a CS-RNTI and an SPS periodicity. The access network device may further indicate an SPS transmission occasion and an SPS frequency domain resource through the PDCCH. It may be understood that, the SPS periodicity time period in this application is a time period whose length is an SPS periodicity.

It may be understood that one SPS periodicity time period may include one or more SPS transmission occasions. In this application, the SPS transmission occasion is an uplink resource used for transmission of downlink service data or a PDSCH. The access network device may send the downlink data to the terminal on the SPS transmission occasion through the PDSCH. The SPS transmission occasion may alternatively be replaced with another possible description, for example, an SPS resource, an SPS PDSCH, a PDSCH resource, a PDSCH opportunity, a PDSCH occasion, an SPS downlink resource, an SPS PDSCH resource, or an SPS PDSCH transmission resource or transmission occasion.

It is specified in the existing protocol that the SPS periodicity is an integer multiple of a slot length supported by NR. For example, when a subcarrier spacing is 30 kHz, and a slot length is 0.5 ms, the SPS periodicity supported by the protocol is (1 to 1280)*0.5 ms. In other words, a minimum periodicity supported by the protocol is 0.5 ms, and a maximum periodicity is 640 ms.

For example, a basic procedure of SPS scheduling is as follows.

1. The access network device configures a related parameter of the SPS periodicity time period by using the RRC signaling, where for example, the related parameter includes a parameter like the CS-RNTI or the SPS periodicity.

2. When downlink data is transmitted through the physical downlink shared channel (physical downlink shared channel, PDSCH), the access network device indicates a specific activated SPS periodicity time period (for example, indicates a periodicity of the activated SPS periodicity time period) through the PDCCH (for example, downlink control information (downlink control information, DCI) carried on the PDCCH), and indicates, by using a resource allocation domain, a frequency domain resource that is specifically allocated for SPS transmission.

3. The MAC entity determines, based on an SPS configuration, a slot that is periodically effective in the SPS periodicity time period. For example, a position of the slot may satisfy the following formula:

(numberOfSlotsPerFrame×SFN+slot number in the frame)=[(numberOfSlotsPerFrame×SFNstart time+slotstart time)+N×periodicity×numberOfSlotsPerFrame/10] modulo (1024×numberOfSlotsPerFrame).

SFN represents a radio system frame number, numberOfSlotsPerFrame represents a quantity of slots included in a radio system frame, slot number in the frame represents a sequence number of a slot in the radio system frame, N represents an N$^{th}$ SPS periodicity time period, periodicity represents a periodicity of the SPS periodicity time period, SFNstart time means a radio frame number in which the PDSCH is started to be sent, and slotstart time refers to a slot number in which the PDSCH is started to be sent. For meanings of other parameters, refer to the descriptions in the CG configuration.

4. If a corresponding SPS periodicity time period needs to be released, the access network device may indicate release of a corresponding resource through the PDCCH (for example, the DCI carried on the PDCCH).

It may be understood that the occasion or the transmission occasion in this application may be a time domain unit used for information transmission. The occasion may also be referred to as a time unit. A unit or a granularity of the occasion is not limited in embodiments of this application. For example, the unit or the granularity of the occasion may be a radio frame (radio frame), a subframe (subframe), a slot (slot), a mini-slot (mini-slot), a time-domain symbol (symbol), or the like.

In a design, one radio frame may include one or more subframes, one subframe may include one or more slots, one slot may include one or more mini-slots, one slot or mini-slot may include one or more time-domain symbols, and the like. The time-domain symbol may be referred to as a symbol for short. The time-domain symbol may be an orthogonal frequency division multiplexing (orthogonal frequency division multiplexing, OFDM) symbol, or may be a discrete Fourier transform spread orthogonal frequency division multiplexing (discrete Fourier transform spread orthogonal frequency division multiplexing, DFT-s-OFDM) symbol, or the like. The mini-slot may be a unit smaller than the slot. For example, one slot may include 14 or 12 time-domain symbols, and one mini-slot may include two, four, or seven time-domain symbols.

There may be different slot lengths for different subcarrier spacings (subcarrier spacings, SCSs). For example, when the subcarrier spacing is 15 kHz, a slot is 1 ms; or when the subcarrier spacing is 30 kHz, a slot is 0.5 ms.

A 15 kHz subcarrier spacing is used as an example. One radio frame may last for 10 ms, one radio frame includes 10 subframes, one subframe may last for 1 ms, one subframe may include one slot, one slot lasts for 1 ms, and one slot may include 14 time-domain symbols. Further, the mini-slot may include four, two, seven, or the like time-domain symbols.

In a mobile cellular network, when the terminal moves from a cell (or a coverage of the access network device) to another cell, handover needs to be performed between cells. Before the handover, the terminal needs to measure a signal of a neighboring cell, and determines, through measurement, when cell handover should be performed. The 3GPP proposes that some measurement occasions (that is, MGs) be reserved. Within the measurement occasions, the terminal cannot send or receive any piece of data, and a receiver is adjusted to a target cell frequency for measurement. At the end of the measurement occasions, the terminal switches the receiver to a current cell to restore sending and receiving.

The access network device configures an MG parameter for the terminal. For example, the MG parameter configured by the access network device for the terminal may include:

(1) A gap offset (gap offset) is used to specify a start subframe when a gap starts. The offset ranges from 0 to mgrp-1 relative to a start position of an MG periodicity time period, where mgrp is a value of a measurement gap repetition period (measurement gap repetition period, MGRP). The MG periodicity time period may be a time period whose length is mgrp.
(2) The MGRP is used for an MG periodicity, that is, a repetition periodicity of the measurement occasion. The value may be 20 ms, 40 ms, 80 ms, or 160 ms. For example, if the value is 40 ms, it indicates that the MG repeats once at an interval of 40 ms.
(3) An MG length (measurement gap length, MGL) is used to specify a duration of a measurement occasion. The unit is ms. A value thereof may be 1.5, 3, 3.5, 4, 5.5, or 6.

For example, a common MG parameter configuration manner is a parameter combination (MGL, MGRP)=(6 ms, 40 ms), where (6 ms, 80 ms) is mandatory parameters, that is, the terminal needs to support the parameter configuration. Another parameter combination may be optional parameters of the terminal, or conditional optional parameters. For example, a parameter combination like (MGL, MGRP)=(1.5 ms, 80 ms) is parameters optional for the terminal.

Currently, when the SPS transmission occasion collides and/or the CG transmission occasion collides with the MG, the terminal cannot perform transmission based on the SPS transmission occasion and/or the CG transmission occasion, but needs to perform measurement on the measurement occasion. This may increase a service transmission delay and affect service performance. In this application, that the SPS transmission occasion collides and/or the CG transmission occasion collides with the MG may be reflected as that the SPS transmission occasion overlaps and/or the CG transmission occasion overlaps the measurement occasion in time domain. In this application, that two occasions overlap in time domain may mean that the two occasions partially overlap or completely overlap in time domain.

The CG transmission occasion is used as an example. For example, as shown in FIG. 2, when the MG length is configured as 6 ms and the MG periodicity is configured as 40 ms, for uplink service data with a frame rate of 60 frames per second, some CG transmission occasions that overlap the MG measurement occasion cannot be used for transmission of a video frame, and consequently, a communication capacity is reduced and a transmission delay is increased. FIG. 2 separately shows a case in which one CG periodicity time period includes one CG transmission occasion and a case in which one CG periodicity time period includes five CG transmission occasions.

In view of this, an embodiment of this application provides a communication method, to reduce the service transmission delay when the SPS transmission occasion collides and/or the CG transmission occasion collides with the MG.

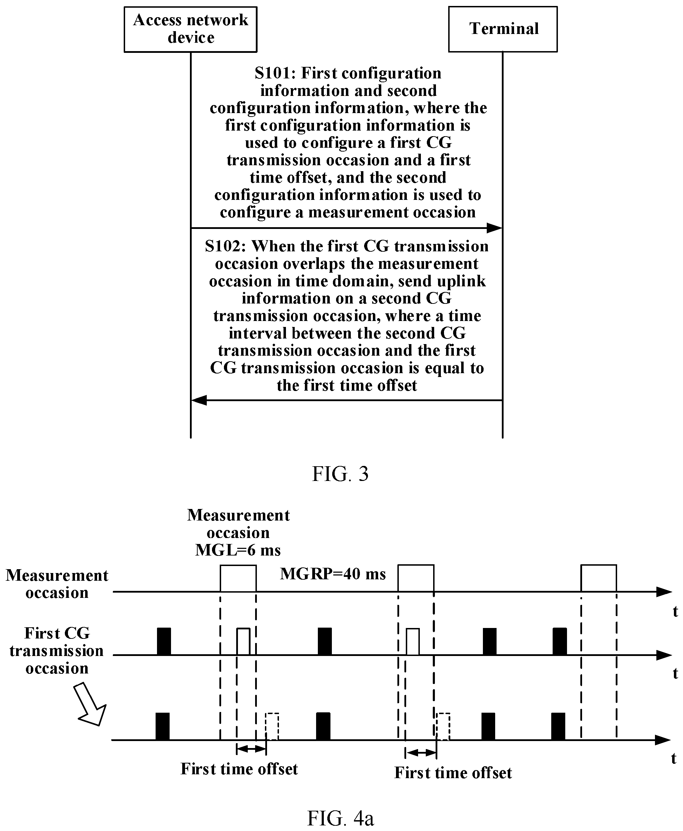

FIG. 3 is a schematic flowchart corresponding to a communication method according to an embodiment of this application.

As shown in FIG. 3, the method includes the following steps.

S101: An access network device sends first configuration information and second configuration information to a terminal. Correspondingly, the terminal receives the first configuration information and the second configuration information.

The first configuration information may be used to configure a first CG transmission occasion and a first time offset. The first CG transmission occasion may include one or more CG transmission occasions in one CG periodicity time period.

The second configuration information may be used to configure a measurement occasion, where the measurement occasion is used for inter-frequency measurement.

S102: When the first CG transmission occasion overlaps the measurement occasion in time domain, the terminal sends uplink information to the access network device on a second CG transmission occasion. A time interval between the second CG transmission occasion and the first CG transmission occasion is equal to the first time offset. Therefore, a time domain position of the second CG transmission occasion may be determined based on a time domain position of first CG and the first time offset. Refer to the following descriptions.

The uplink information may include uplink data of a cloud gaming service and/or uplink data of an XR service.

Correspondingly, when the first CG transmission occasion overlaps the measurement occasion in time domain, the access network device receives, on the second CG transmission occasion, the uplink information sent by the terminal.

It can be learned that, based on the procedure shown in FIG. 3, in the communication method provided in this application, the terminal and the access network device may perform transmission of the uplink information on the second CG transmission occasion when the first CG transmission occasion overlaps the measurement occasion in time domain. The time interval between the second CG transmission occasion and the first CG transmission occasion may be the first time offset configured by the access network device. Therefore, when the first CG transmission occasion overlaps the measurement occasion in time domain, the transmission of the uplink information may be performed in a timely manner on the second CG transmission occasion, to reduce a service transmission delay.

The following describes the first configuration information in S101.

In a possible embodiment, the first configuration information may be used to configure a CG. For example, the first configuration information may be used to configure at least parameters such as a CG periodicity and a CG time domain resource. The CG configured by using the first configuration information may be a type-1 CG or a type-2 CG. This is not specifically limited in this application.

Specifically, the first configuration information may include a time domain resource configuration that indicates the first CG transmission occasion. For example, the first configuration information may include a periodicity field and a time domain allocation status field in a ConfiguredGrantConfig domain. For example, a time domain allocation status parameter may include a time domain resource allocation (timeDomainAllocation) field and a time domain offset (timeDomainOffset) field.

The time domain resource allocation field may indicate a combination of a start symbol length and a PUSCH mapping type. For example, a value of the time domain resource allocation domain may indicate a row in a resource allocation table, and information in the row may be used to determine the time domain position of the first CG transmission occasion. For example, any row in the resource allocation table includes a group of CG periodicity time period indication information, for example, includes a slot offset of a CG transmission occasion, a start symbol (that is, S) of the CG transmission occasion relative to a slot start point, and a quantity L of consecutive symbols included in the CG transmission occasion (that is, a length of the CG transmission occasion). The time domain offset field may indicate an offset of a time-frequency resource relative to a system frame number (system frame number, SFN).

It may be understood that the terminal may determine the time domain position of the first CG transmission occasion based on the time domain resource allocation field and the time domain offset field. A determining manner of the time domain position does not belong to content limited in this application. This application also does not restrict the first configuration information from being used to configure the CG transmission occasion in another manner.

In addition, optionally, when the CG periodicity time period configured by using the first configuration information includes a plurality of CG transmission occasions, the first configuration information may further include a time interval between the plurality of CG transmission occasions. For example, when the plurality of CG transmission occasions are distributed at equal time intervals, the first configuration information may include a parameter that indicates the time interval between the plurality of CG transmission occasions.

In addition, the first configuration information may further include a configuration of the first time offset, to indicate the time interval between the second CG transmission occasion and the first CG transmission occasion. Therefore, a start position of the second CG transmission occasion may be determined based on a start position of the first CG transmission occasion and the first time offset. For example, a moment value of the time domain start position of the second CG transmission occasion is a sum of a moment value of the time domain start position of the first CG transmission occasion and a value of the first time offset. In S102, the second CG transmission occasion may be used by the terminal to send the uplink information.

Optionally, a time domain length of the second CG transmission occasion may be the same as or different from a time domain length of the first CG transmission occasion. This is not specifically limited in this application. If the time domain length of the second CG transmission occasion is different from the time domain length of the first CG transmission occasion, the first configuration information may further include a configuration of the time domain length of the second CG transmission occasion; or the time domain length of the second CG transmission occasion may use a default configuration, and the default configuration may be determined in a predefined or preconfigured manner. In this application, the predefined manner may be that the configuration is implemented based on local configuration information of a device, and the local configuration information may include device factory configuration information or protocol- or standard-based configuration information. The preconfigured manner may be that the access network device configures the terminal by using signaling or information such as RRC signaling, a MAC CE, or DCI.

It may be understood that, regardless of whether the first CG transmission occasion includes one or more CG transmission occasions, the second CG transmission occasion may include one or more CG transmission occasions. If the second CG transmission occasion includes a plurality of CG transmission occasions, the first time offset may indicate a time interval between a 1st CG transmission occasion in the second CG transmission occasion and the first CG transmission occasion.

It may be further understood that a quantity of CG transmission occasions included in the second CG transmission occasion may be the same as or different from a quantity of CG transmission occasions included in the first CG transmission occasion. This is not specifically limited in this application. For example, the first CG transmission occasion includes M CG transmission occasions in one CG periodicity time period, where M is a positive integer. When a time interval between an end position of the first CG transmission occasion and an end position of the CG periodicity time period is large, the second CG transmission occasion may include no fewer than M CG transmission occasions. For another example, the first CG transmission occasion includes M CG transmission occasions in one CG periodicity time period, where M is a positive integer. When a time interval between an end position of the first CG transmission occasion and an end position of the CG periodicity time period is small, the second CG transmission occasion may include no more than M CG transmission occasions.

In addition, an interval between the plurality of CG transmission occasions included in the second CG transmission occasion may be the same as or different from an interval between the plurality of CG transmission occasions included in the first CG transmission occasion.

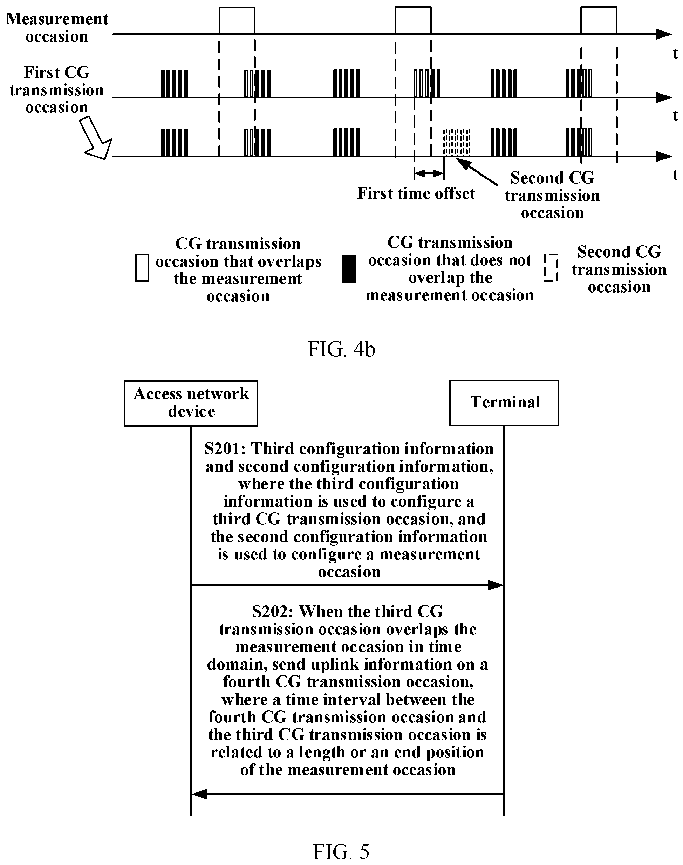

As shown in a scenario numbered FIG. 4a, when one CG periodicity time period includes only one CG transmission occasion, the CG transmission occasion is the first CG transmission occasion. In this case, the first time offset may be the time interval between the second CG transmission occasion and the first CG transmission occasion. As shown in a scenario numbered FIG. 4b, when one CG periodicity time period includes a plurality of CG transmission occasions, the plurality of CG transmission occasions are the first CG transmission occasion. In this case, the first time offset may be a time interval between the second CG transmission occasion and a 1st CG transmission occasion in the plurality of CG transmission occasions included in the first CG transmission occasion.

Optionally, the first configuration information includes a configured grant-measurement gap-offset (CG-MG-offset) field, and a value of the field is the first time offset, that is, the CG-MG-offset field may be used to configure the first time offset. It is not excluded that the first configuration information indicates the first time offset by using another field or reusing an existing field.

The following describes a value range of the first time offset.

The value of the first time offset indicates a time domain length of the first time offset. Therefore, the value range of the first time offset is equivalent to a length range of the first time offset.

In a possible embodiment, the length of the first time offset is greater than or equal to a length of the measurement occasion, or the value of the first time offset is not less than the length of the measurement occasion. The length of the measurement occasion is an MG length, and a value of the length may be indicated by an MGL field. An advantage of using this design is that the value of the first time offset is properly set, so that the second CG transmission occasion is after the measurement occasion, and the terminal can send the uplink information after the measurement occasion, to avoid a case in which the uplink information cannot be sent because the measurement occasion overlaps the first CG transmission occasion.

In a possible embodiment, the length of the first time offset is less than or equal to a length of the time interval between the end position of the CG periodicity time period that the first CG transmission occasion is in and the end position of the first CG transmission occasion. In other words, the value of the first time offset is less than or equal to a difference between a moment at the end position of the CG periodicity time period that the first CG transmission occasion is in and a moment at the end position of the first CG transmission occasion. An advantage of using this design is that the value of the first time offset is properly set, so that the second CG transmission occasion and the first CG transmission occasion are in a same CG periodicity time period, and the terminal can send the uplink information in a timely manner, to reduce a transmission delay.

It may be understood that the access network device may determine the value of the first time offset based on the value range of the first time offset.

In addition, the first configuration information may further include another parameter included in the type-1 CG and/or the type-2 CG. For details, refer to descriptions of CG parameters in this application, or refer to descriptions in a related communication standard or protocol.

Optionally, the first configuration information may be (or included in) higher layer configuration signaling, for example, an RRC message or a MAC control element (control element, CE). For example, the first configuration information may include a configured grant configuration (ConfiguredGrantConfig) domain used to configure the CG. In addition, it is not excluded that the first configuration information includes information, for example, a resource allocation domain, that is in a non-higher layer configuration like DCI.

The following describes the second configuration information.

In this application, the second configuration information may be used to configure the measurement occasion, and the measurement occasion may be an MG. The measurement occasion may be used for inter-frequency measurement.

The second configuration information may be configuration information of an MG parameter, and may be used to determine a time domain position of the measurement occasion in this application. For example, the second configuration information may be used to configure one or more parameters of an interval offset of the MG, an MGRP, and the MG length.

Optionally, the second configuration information may be (or included in) the higher layer configuration signaling, for example, the RRC message or the MAC CE. For example, the second configuration information may include a measurement gap configuration (MeasGapConfig) domain.

The following describes a manner in which the terminal determines and/or the access network device determines whether the first CG transmission occasion overlaps the measurement occasion in time domain in S102.

In an implementation of S102, the terminal and/or the access network device may determine, based on the time domain position of the first CG transmission occasion and the time domain position of the measurement occasion, whether the first CG transmission occasion overlaps the measurement occasion in time domain. For example, the terminal and/or the access network device may determine the time domain position of the first CG transmission occasion based on the first configuration information, determine the time domain position of the measurement occasion based on the second configuration information, and then determine whether the time domain position of the first CG transmission occasion overlaps the time domain position of the measurement occasion.

In another implementation of S102, the terminal and/or the access network device may alternatively determine, based on the first configuration information and the second configuration information, whether the first CG transmission occasion overlaps the measurement occasion in time domain, without a need to first determine the time domain position of the first CG transmission occasion and the time domain position of the measurement occasion. For example, the terminal and/or the access network device may determine, based on a periodicity, a time domain resource allocation field, and a time domain offset terminal that are indicated by the first configuration information, based on the interval offset of the MG, the MGRP, and the MG length that are indicated by the second configuration information, and according to a formula or through table query, whether a time domain position of a first CG transmission occasion in a specific CG periodicity time period overlaps the time domain position of the measurement occasion.

It may be understood that, in S102, when the first CG transmission occasion overlaps the measurement occasion in time domain, the terminal and/or the access network device may determine the time domain position of the second CG transmission occasion based on the time domain position of the first CG transmission occasion and the first time offset, to perform transmission of the uplink information on the second CG transmission occasion. For example, the terminal and/or the access network device may use the sum of the moment value of the time domain start position of the first CG transmission occasion and the value of the first time offset as the moment value of the time domain start position of the second CG transmission occasion.

In an optional embodiment of S102, if the first CG transmission occasion includes N1 CG transmission occasions, and N1 is a positive integer greater than 1, the terminal may send the uplink information to the access network device on the second CG transmission occasion when at least K1 transmission occasions (which may alternatively be replaced with more than K1 transmission occasions) in the N1 CG transmission occasions overlap the measurement occasion in time domain. Correspondingly, the access network device may receive, on the second CG transmission occasion when the at least K1 transmission occasions in the N1 CG transmission occasions overlap the measurement occasion in time domain, the uplink information sent by the terminal. In this embodiment, K1 may be used as a threshold condition for triggering execution of S102, that is, the uplink information is sent on the second CG transmission occasion only when no fewer than at least K1 transmission occasions overlap the measurement occasion in time domain.

For example, as shown in FIG. 4b, one CG periodicity time period includes N1=5 CG transmission occasions. When K1=3 is configured, the uplink information is sent by using the second CG transmission occasion when at least three CG transmission occasions need to overlap the measurement occasion. When one or two CG transmission occasions in the N1=5 CG transmission occasions overlap the measurement occasion, the uplink information does not need to be sent by using the second CG transmission occasion. In this case, the terminal and the access network device still perform transmission of the uplink information by using a CG transmission occasion that does not overlap the measurement occasion and that is in the N1=5 CG transmission occasions.

An advantage of this design is that if N1 CG transmission occasions are configured in one CG periodicity time period, and P1 CG transmission occasions in the N1 CG transmission occasions overlap the measurement occasion, if P1 is less than K1, delay impact of the measurement occasion on service transmission is limited because there are still at least K1-P1 CG transmission occasions available for service transmission. In this case, the transmission solution in S102 may not be used to reduce system complexity. However, when the at least K1 CG transmission occasions in the N1 CG transmission occasions overlap the measurement occasion, and remaining N1-K1 transmission occasions cannot meet a service transmission requirement, the uplink information may be sent by using the solution shown in S102.

Optionally, in this embodiment, the first configuration information may be further used to configure K1, for example, configure a value of K1. Alternatively, the first configuration information may be further used to configure a proportion of the K1 CG transmission occasions in the N1 CG transmission occasions, where the proportion may be represented as K1/N1, and "/" herein represents a division operation. In addition, it is not excluded that the access network device configures K1 or the foregoing proportion by using information or a message other than the first configuration information, for example, the RRC signaling, the MAC CE, or the DCI. Alternatively, K1 or the foregoing proportion may be preconfigured in the terminal and/or the access network device through a protocol, factory configuration, or the like.

In another embodiment of S102, the uplink information sent by the terminal device to the access network device may be carried on a high-priority logical channel. In other words, if the uplink information is carried on a low-priority logical channel, the uplink information may be sent while the method shown in this application is ignored. Therefore, in a transmission process for the high-priority logical channel, when the first CG transmission occasion overlaps the measurement occasion in time domain, the uplink information may be sent on the second CG transmission occasion, so that a service delay of the high-priority logical channel can be reduced. The method in this application may not be used in transmission of the low-priority logical channel, to reduce complexity, and preferentially ensure transmission performance of a service with high importance when resources are limited.

In this application, a priority of the logical channel may be determined based on a value of a priority (priority) field in a logical channel configuration (LogicalChannelConfig) domain. A logical channel with a smaller value of the priority field has a higher priority. A logical channel configuration domain corresponding to a logical channel of the uplink information may be carried in the RRC signaling, the MAC CE, or the DCI sent by the access network device to the terminal.

For example, the high-priority logical channel may be a logical channel whose value of the priority field is less than or equal to a priority field threshold. Alternatively, the value of the priority field of the high-priority logical channel is less than or equal to a value of a priority field of an uplink logical channel of at least one other piece of uplink information of the terminal.

FIG. 5 is a schematic flowchart corresponding to a communication method according to an embodiment of this application. A difference between the method shown in FIG. 5 and the method shown in FIG. 3 lies in that, in the method shown in FIG. 5, an access network device does not need to configure a first time offset. In addition, when a CG transmission occasion overlaps a measurement occasion, a terminal and/or the access network device may determine, based on a length or an end position of the measurement occasion, the CG transmission occasion used for uplink transmission.

As shown in FIG. 5, the method may include the following steps.

S201: The access network device sends third configuration information and second configuration information to the terminal. Correspondingly, the terminal receives the third configuration information and the second configuration information.

The third configuration information may be used to configure a third CG transmission occasion. The third CG transmission occasion may include one or more CG transmission occasions in one CG periodicity time period. The second configuration information may be used to configure a measurement occasion. For the second configuration information and the measurement occasion, refer to the descriptions of S101. Details are not described herein again.

The following describes the third configuration information.

In a possible embodiment, the third configuration information may be used to configure a CG. For example, the third configuration information may be used to configure at least parameters such as a CG periodicity and a CG time domain resource. The CG configured by using the third configuration information may be a type-1 CG or a type-2 CG. This is not specifically limited in this application.

Specifically, the third configuration information may include a time domain resource configuration that indicates the third CG transmission occasion. For details, refer to the descriptions of configuring the first CG transmission occasion by using the first configuration information in S101 in this application.

In addition, optionally, when the CG periodicity time period configured by using the third configuration information includes a plurality of CG transmission occasions, the first configuration information may further include a time interval between the plurality of CG transmission occasions. For example, when the plurality of CG transmission occasions are distributed at equal time intervals, the third configuration information may include a parameter that indicates the time interval between the plurality of CG transmission occasions.

It may be understood that the third configuration information may further include another parameter included in the type-1 CG and/or the type-2 CG. For details, refer to descriptions of CG parameters in this application, or refer to descriptions in a related communication standard or protocol.

Optionally, the third configuration information may be (or included in) higher layer configuration signaling, for example, an RRC message or a MAC CE. For example, the third configuration information may include a Configured-GrantConfig domain used to configure the CG. In addition, it is not excluded that the third configuration information includes information, for example, a resource allocation domain, that is in a non-higher layer configuration like DCI.

S202: When the third CG transmission occasion overlaps the measurement occasion in time domain, the terminal sends uplink information to the access network device on a fourth CG transmission occasion. Correspondingly, when the third CG transmission occasion overlaps the measurement occasion in time domain, the access network device receives, on the fourth CG transmission occasion, the uplink information sent by the terminal.

In S202, a time interval between the fourth CG transmission occasion and the third CG transmission occasion is related to a length or an end position of the measurement occasion.

It may be understood that, for a manner in which the terminal determines and/or the access network device determines whether the third CG transmission occasion overlaps the measurement occasion in time domain in S202, refer to the descriptions of the manner of determining whether the first CG transmission occasion overlaps the measurement occasion in time domain in S102. Repeated content is not described again.

In S202, the end position of the measurement occasion is related to the length of the measurement occasion, in other words, the end position of the measurement occasion may be determined based on the length of the measurement occasion. For example, when the access network device configures an interval offset of an MG, an MGRP, and an MG length, a time domain position of the measurement occasion in an MG periodicity time period may be determined based on the interval offset of the MG, the MGRP, and the MG length.

In a possible embodiment, the fourth CG transmission occasion may be a 1st uplink slot after the measurement occasion. Therefore, the time interval between the fourth CG transmission occasion and the third CG transmission occasion may be determined based on the end position of the measurement occasion.

In this embodiment, the terminal and/or the access network device may determine, based on the end position of the measurement occasion that overlaps the third CG transmission occasion, an uplink slot that the fourth CG transmission occasion is in.

In another possible embodiment, the time interval between the fourth CG transmission occasion and the third CG transmission occasion may be equal to a time difference between the end position of the measurement occasion and a start position of the third CG transmission occasion. In other words, the time interval between the fourth CG transmission occasion and the third CG transmission occasion may satisfy the following formula:

The time interval between the fourth CG transmission occasion and the third CG transmission occasion=a moment value of the end position of the measurement occasion-a moment value of the start position of the third CG transmission occasion.

In this embodiment, the terminal and/or the access network device may determine a time domain position of the fourth CG transmission occasion based on the time domain position of the third CG transmission occasion and the time difference between the end position of the measurement occasion and the start position of the third CG transmission occasion. For example, the moment value of the start position of the third CG transmission occasion and the difference between the moment value of the end position of the measurement occasion and the moment value of the start position of the third CG transmission occasion are summed, to obtain a moment value of a start position of the fourth CG transmission occasion.

In addition, the time domain position of the fourth CG transmission occasion may alternatively be determined with reference to the foregoing two embodiments. For example, if the time domain position of the CG transmission occasion determined by the terminal and/or the access network device based on the time domain position of the third CG transmission occasion and the time difference between the end position of the measurement occasion and the start position of the third CG transmission occasion still overlaps the time domain position of the measurement occasion, a time domain position of a finally used fourth CG transmission occasion may be determined based on the end position of the measurement occasion.

In another embodiment, the time interval between the fourth CG transmission occasion and the third CG transmission occasion may be the fixed length of the measurement occasion. For example, in this embodiment, the terminal and/or the access network device may sum the moment value of the start position of the third CG transmission occasion and a length value of the measurement occasion to obtain a moment value of a start position of the fourth CG transmission occasion.

It can be learned that, based on the procedure shown in FIG. 5, in the communication method provided in this application, the terminal and the access network device may perform transmission of the uplink information on the fourth CG transmission occasion when the third CG transmission occasion overlaps the measurement occasion in time domain. The time interval between the fourth CG transmission occasion and the third CG transmission occasion may be determined based on the length or the end position of the measurement occasion. Therefore, when the third CG transmission occasion overlaps the measurement occasion in time domain, the transmission of the uplink information may be performed in a timely manner on the fourth CG transmission occasion, to reduce a service transmission delay.

A difference between the procedure shown in FIG. 5 and the procedure shown in FIG. 3 lies in that, in S201, the third configuration information does not need to carry a time domain offset of the time interval between the third CG transmission occasion and the fourth CG transmission occasion; and correspondingly, the time domain position of the fourth CG transmission occasion may be determined based on the time domain position of the third CG transmission occasion and the length or the end position of the measurement occasion. Compared with the method shown in FIG. 3, this manner can reduce complexity of a configuration process and reduce signaling overheads.

Similar to the embodiment of S102, in an optional embodiment of S202, if the third CG transmission occasion includes N2 CG transmission occasions, and N2 is a positive integer greater than 1, the terminal may send the uplink information to the access network device on the fourth CG transmission occasion when at least K2 transmission occasions (which may alternatively be replaced with more than K2 transmission occasions) in the N2 CG transmission occasions overlap the measurement occasion in time domain. Correspondingly, the access network device may receive, on the fourth CG transmission occasion, the uplink information sent by the terminal when the at least K2 transmission occasions in the N2 CG transmission occasions overlap the measurement occasion in time domain. In this embodiment, K2 may be used as a threshold condition for triggering execution of S202, that is, the uplink information is sent on the fourth CG transmission occasion only when no fewer than at least K2 transmission occasions overlap the measurement occasion in time domain. The method in this application may not be used in transmission of a low-priority logical channel, to reduce complexity, and preferably ensure transmission performance of a service with high importance when resources are limited.

In this embodiment, the third configuration information may be further used to configure K2, for example, configure a value of K2. Alternatively, the third configuration information may be further used to configure a proportion of the K2 CG transmission occasions in the N2 CG transmission occasions. In addition, it is not excluded that the access network device configures K2 or the foregoing proportion by using information or a message other than the third configuration information, for example, RRC signaling, a MAC CE, or DCI. Alternatively, K2 or the foregoing proportion may be preconfigured in the terminal and/or the access network device through a protocol, factory configuration, or the like.

In another embodiment of S202, the uplink information sent by the terminal device to the access network device may be carried on a high-priority logical channel. In other words, if the uplink information is carried on the low-priority logical channel, the uplink information may be sent while the method shown in this application is ignored. Refer to the descriptions of S102. A priority of the logical channel may be determined based on a value of a priority field.

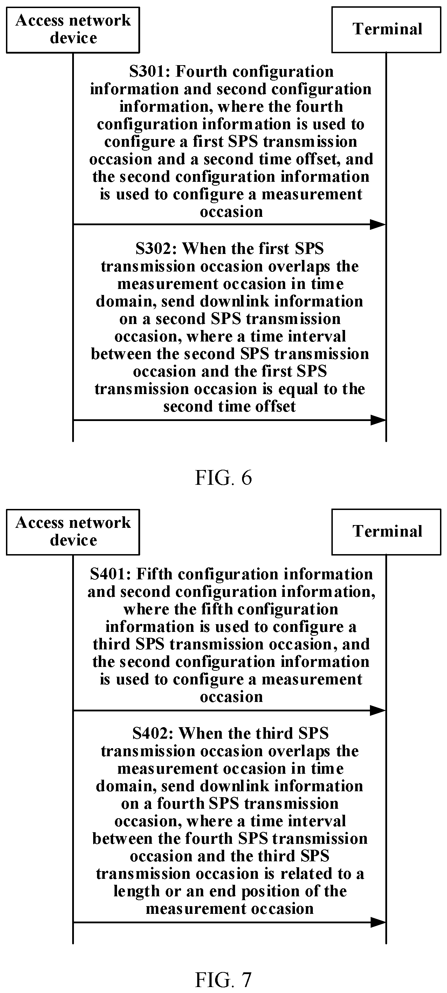

FIG. 6 is a schematic flowchart corresponding to a communication method according to an embodiment of this application. A difference between the method shown in FIG. 6 and the method shown in FIG. 3 lies in that the method shown in FIG. 6 is applied to SPS-based downlink transmission, and the method shown in FIG. 3 is applied to CG-based uplink transmission.

As shown in FIG. 6, the method may include the following steps.

S301: An access network device sends fourth configuration information and second configuration information to a terminal. Correspondingly, the terminal receives the fourth configuration information and the second configuration information.

The fourth configuration information may be used to configure a first SPS transmission occasion and a second time offset. The first SPS transmission occasion may include one or more SPS transmission occasions in one SPS periodicity time period.

The second configuration information may be used to configure a measurement occasion, where the measurement occasion is used for inter-frequency measurement. For the second configuration information and the measurement occasion, refer to the descriptions of the procedure in FIG. 3. Details are not described again.

S302: When the first SPS transmission occasion overlaps the measurement occasion in time domain, the access network device sends downlink information to the terminal on a second SPS transmission occasion. A time interval between the second SPS transmission occasion and the first SPS transmission occasion is equal to the second time offset. Therefore, a time domain position of the second SPS transmission occasion may be determined based on a time domain position of first SPS and the second time offset. Refer to the following descriptions.

The downlink information may include downlink data of a cloud gaming service and/or downlink data of an XR service.

Correspondingly, when the first SPS transmission occasion overlaps the measurement occasion in time domain, the terminal receives the downlink information of the access network device on the second SPS transmission occasion.

It can be learned that, based on the procedure shown in FIG. 6, in the communication method provided in this application, the terminal and the access network device may perform transmission of the downlink information on the second SPS transmission occasion when the first SPS transmission occasion overlaps the measurement occasion in time domain. The time interval between the second SPS transmission occasion and the first SPS transmission occasion may be the second time offset configured by the access network device. Therefore, when the first SPS transmission occasion overlaps the measurement occasion in time domain, the transmission of the downlink information may be performed in a timely manner on the second SPS transmission occasion, to reduce a service transmission delay.

The following describes the fourth configuration information in S301.

In a possible embodiment, the fourth configuration information may be used to configure SPS. For example, the fourth configuration information may be used to configure at least parameters such as an SPS periodicity and an SPS time domain resource.

Specifically, the fourth configuration information may include a time domain resource configuration that indicates the first SPS transmission occasion. For example, the fourth configuration information may further include a field that is in DCI and that indicates the SPS time domain resource, for example, a resource allocation domain. The field may indicate the position of the first SPS transmission occasion. In addition, the fourth configuration information may further include a periodicity field in an SPS configuration (SPS-Config) domain.

It may be understood that the terminal may determine the time domain position of the first SPS transmission occasion based on the field that indicates the SPS time domain resource, for example, the resource allocation domain. A determining manner of the time domain position does not belong to content limited in this application. This application also does not restrict the fourth configuration information from being used to configure the SPS transmission occasion in another manner.

In addition, optionally, when the SPS periodicity time period configured by using the fourth configuration information includes a plurality of SPS transmission occasions, the fourth configuration information may further include a time interval between the plurality of SPS transmission occasions. For example, when the plurality of SPS transmission occasions are distributed at equal time intervals, the fourth configuration information may include a parameter that indicates the time interval between the plurality of SPS transmission occasions.

In addition, the fourth configuration information may further include a configuration of the second time offset, to indicate the time interval between the second SPS transmission occasion and the first SPS transmission occasion. Therefore, a start position of the second SPS transmission occasion may be determined based on a start position of the first SPS transmission occasion and the second time offset. For example, a moment value of the time domain start position of the second SPS transmission occasion is a sum of a moment value of the time domain start position of the first SPS transmission occasion and a value of the second time offset. In S302, the second SPS transmission occasion may be used for transmission of the downlink information. Optionally, a time domain length of the second SPS transmission occasion may be the same as or different from a time domain length of the first SPS transmission occasion. This is not specifically limited in this application. If the time domain length of the second SPS transmission occasion is different from the time domain length of the first SPS transmission occasion, the fourth configuration information may further include a configuration of the time domain length of the second SPS transmission occasion; or the time domain length of the second SPS transmission occasion may use a default configuration, and the default configuration may be determined in a predefined or preconfigured manner.

It may be understood that, regardless of whether the first SPS transmission occasion includes one or more SPS transmission occasions, the second SPS transmission occasion may include one or more SPS transmission occasions. If the second SPS transmission occasion includes a plurality of SPS transmission occasions, the second time offset may indicate a time interval between a 1st SPS transmission occasion in the second SPS transmission occasion and the first SPS transmission occasion.

It may be further understood that a quantity of SPS transmission occasions included in the second SPS transmission occasion may be the same as or different from a quantity of SPS transmission occasions included in the first SPS transmission occasion. This is not specifically limited in this application. For example, the first SPS transmission occasion includes Q SPS transmission occasions in one SPS periodicity time period, where Q is a positive integer. When a time interval between an end position of the first SPS transmission occasion and an end position of the SPS periodicity time period is large, the second SPS transmission occasion may include no fewer than Q SPS transmission occasions. For another example, the first SPS transmission occasion includes Q SPS transmission occasions in one SPS periodicity time period, where Q is a positive integer. When a time interval between an end position of the first SPS transmission occasion and an end position of the SPS periodicity time period is small, the second SPS transmission occasion may include no more than Q SPS transmission occasions.

In addition, an interval between the plurality of SPS transmission occasions included in the second SPS transmission occasion may be the same as or different from an interval between the plurality of SPS transmission occasions included in the first SPS transmission occasion.

A time domain position relationship between the second SPS transmission occasion and the first SPS transmission occasion is similar to a time domain position relationship between the first CG transmission occasion and the second CG transmission occasion. Therefore, reference may be made to FIG. 4. For example, the CG transmission occasion in FIG. 4 may be replaced with the SPS transmission occasion. For example, when one SPS periodicity time period includes only one SPS transmission occasion, the SPS transmission occasion is the first SPS transmission occasion. In this case, the second time offset may be the time interval between the second SPS transmission occasion and the first SPS transmission occasion. For another example, when one SPS periodicity time period includes a plurality of SPS transmission occasions, the plurality of SPS transmission occasions are the first SPS transmission occasion. In this case, the second time offset may be a time interval between the second SPS transmission occasion and a $1^{st}$ SPS transmission occasion in the plurality of SPS transmission occasions included in the first SPS transmission occasion.

Optionally, the fourth configuration information includes a semi-persistent scheduling-measurement gap-offset (SPS-MG-offset) field, and a value of the field is the second time offset, that is, the SPS-MG-offset field may be used to configure the second time offset. It is not excluded that the fourth configuration information indicates the second time offset by using another field or reusing an existing field.

For a value range of the second time offset, refer to the value range of the first time offset. For example, a length of the second time offset is greater than or equal to a length of the measurement occasion, or a value of the second time offset may not be less than the length of the measurement occasion; and/or the length of the second time offset is less than or equal to a length of the time interval between the end position of the SPS periodicity time period that the first SPS transmission occasion is in and the end position of the first SPS transmission occasion.

It may be understood that the access network device may determine the value of the first time offset based on the value range of the first time offset.

The value of the second time offset indicates a time domain length of the second time offset. Therefore, the value range of the second time offset is equivalent to a length range of the second time offset.

In addition, the fourth configuration information may further include another parameter included in an SPS configuration. For details, refer to descriptions of SPS parameters in this application, or refer to descriptions in a related communication standard or protocol.

Optionally, the fourth configuration information may be (or included in) higher layer configuration signaling, for example, an RRC message or a MAC CE. For example, the fourth configuration information may include an SPS-Config domain used to configure the SPS. In addition, it is not excluded that the fourth configuration information includes information, for example, a resource allocation domain, that is in a non-higher layer configuration like DCI.

The following describes a manner in which the terminal determines and/or the access network device determines whether the first SPS transmission occasion overlaps the measurement occasion in time domain in S302.

Similar to the implementation of S103, in an implementation of S302, the terminal and/or the access network device may determine, based on the time domain position of the first SPS transmission occasion and the time domain position of the measurement occasion, whether the first SPS transmission occasion overlaps the measurement occasion in time domain. The first SPS transmission occasion may be determined based on the fourth configuration information. In addition, the measurement occasion may be determined based on the second configuration information. In another implementation of S302, the terminal and/or the access network device may alternatively determine, based on the fourth configuration information and the second configuration information, whether the first SPS transmission occasion overlaps the measurement occasion in time domain, without a need to first determine the time domain position of the first SPS transmission occasion and the time domain position of the measurement occasion.

It may be understood that, in S302, when the first SPS transmission occasion overlaps the measurement occasion in time domain, the terminal and/or the access network device may determine the time domain position of the second SPS transmission occasion based on the time domain position of the first SPS transmission occasion and the first time offset, to perform transmission of the downlink information on the second SPS transmission occasion.

In an optional embodiment of S302, if the first SPS transmission occasion includes N3 SPS transmission occasions, and N3 is a positive integer greater than 1, the access network device may send the downlink information to the access network device on the second SPS transmission occasion when at least K3 transmission occasions (which may alternatively be replaced with more than K3 transmission occasions) in the N3 SPS transmission occasions overlap the measurement occasion in time domain. Correspondingly, the terminal may receive the downlink information on the second SPS transmission occasion when the at least K3 transmission occasions in the N3 SPS transmission occasions overlap the measurement occasion in time domain. In this embodiment, K3 may be used as a threshold condition for triggering execution of S302, that is, the transmission of the downlink information is performed on the second SPS transmission occasion only when no fewer than at least K3 transmission occasions overlap the measurement occasion in time domain. The method in this application may not be used in transmission of a low-priority logical channel, to reduce complexity, and preferentially ensure transmission performance of a service with high importance when resources are limited.

In this embodiment, the third configuration information may be further used to configure K3, for example, configure a value of K3. Alternatively, the third configuration information may be further used to configure a proportion of the K3 SPS transmission occasions in the N3 SPS transmission occasions. In addition, it is not excluded that the access network device configures K3 or the foregoing proportion by using information or a message other than the third configuration information, for example, RRC signaling, a MAC CE, or DCI. Alternatively, K3 or the foregoing proportion may be preconfigured in the terminal and/or the access network device through a protocol, factory configuration, or the like.

In another embodiment of S302, the downlink information sent by the access network device to the terminal may be carried on a high-priority logical channel. In other words, if the downlink information is carried on the low-priority logical channel, the downlink information may be sent while the method shown in this application is ignored. Refer to the descriptions of S102. A priority of the logical channel may be determined based on a value of a priority field.

FIG. 7 is a schematic flowchart corresponding to a communication method according to an embodiment of this application. A difference between the method shown in FIG. 7 and the method shown in FIG. 6 lies in that, in the method shown in FIG. 7, an access network device does not need to configure a first time offset. In addition, when an SPS transmission occasion overlaps a measurement occasion, a terminal and/or the access network device may determine, based on a length or an end position of the measurement occasion, the SPS transmission occasion used for downlink transmission.

As shown in FIG. 7, the method may include the following steps.

S401: The access network device sends fifth configuration information and second configuration information to the terminal. Correspondingly, the terminal receives the fifth configuration information and the second configuration information.

The fifth configuration information may be used to configure a third SPS transmission occasion. The third SPS transmission occasion may include one or more SPS transmission occasions in one SPS periodicity time period. The second configuration information may be used to configure a measurement occasion. For the second configuration information and the measurement occasion, refer to the descriptions of S101. Details are not described herein again.

The following describes the fifth configuration information.

In a possible embodiment, the fifth configuration information may be used to configure SPS. For example, the fifth configuration information may be used to configure at least parameters such as an SPS periodicity and/or an SPS time domain resource.

Specifically, the fifth configuration information may include a time domain resource configuration that indicates the third SPS transmission occasion. For details, refer to the descriptions of configuring the first SPS transmission occasion by using the fourth configuration information in S301 in this application. For example, the fifth configuration information may further include a field that is in DCI and that indicates the SPS time domain resource, for example, a resource allocation domain. The field may indicate a position of the third SPS transmission occasion.

In addition, optionally, when the SPS periodicity time period configured by using the fifth configuration information includes a plurality of SPS transmission occasions, the fifth configuration information may further include a time interval between the plurality of SPS transmission occasions. For example, when the plurality of SPS transmission occasions are distributed at equal time intervals, the fifth configuration information may include a parameter that indicates the time interval between the plurality of SPS transmission occasions.

It may be understood that, the fifth configuration information may further include another parameter of an SPS configuration. For details, refer to descriptions of SPS parameters in this application, or refer to descriptions in a related communication standard or protocol.

Optionally, the fifth configuration information may be (or included in) higher layer configuration signaling, for example, an RRC message or a MAC CE. For example, the fifth configuration information may include an SPS-Config domain used to configure the SPS. In addition, it is not excluded that the fifth configuration information includes information, for example, a resource allocation domain, that is in a non-higher layer configuration like DCI.

S402: When the third SPS transmission occasion overlaps the measurement occasion in time domain, the access network device sends downlink information to the terminal on a fourth SPS transmission occasion. Correspondingly, when the third SPS transmission occasion overlaps the measurement occasion in time domain, the access network device receives, on the fourth SPS transmission occasion, the downlink information sent by the terminal.

In S402, a time interval between the fourth SPS transmission occasion and the third SPS transmission occasion is related to a length or an end position of the measurement occasion.

It may be understood that, for a manner in which the terminal determines and/or the access network device determines whether the third SPS transmission occasion overlaps the measurement occasion in time domain in S402, refer to the descriptions of the manner of determining whether the first SPS transmission occasion overlaps the measurement occasion in time domain in S102. Repeated content is not described again.

In S402, the end position of the measurement occasion is related to the length of the measurement occasion, in other words, the end position of the measurement occasion may be determined based on the length of the measurement occasion. For example, when the access network device configures an interval offset of an MG, an MGRP, and an MG length, a time domain position of the measurement occasion in an MG periodicity time period may be determined based on the interval offset of the MG, the MGRP, and the MG length.

In a possible embodiment, the fourth SPS transmission occasion may be a $1^{st}$ downlink slot after the measurement occasion. Therefore, the time interval between the fourth SPS transmission occasion and the third SPS transmission occasion may be determined based on the end position of the measurement occasion.

In this embodiment, the terminal and/or the access network device may determine, based on the end position of the measurement occasion that overlaps the third SPS transmission occasion, a downlink slot that the fourth SPS transmission occasion is in.

In another possible embodiment, the time interval between the fourth SPS transmission occasion and the third SPS transmission occasion may be equal to a time difference between the end position of the measurement occasion and a start position of the third SPS transmission occasion. In other words, the time interval between the fourth SPS transmission occasion and the third SPS transmission occasion may satisfy:

The time interval between the fourth SPS transmission occasion and the third SPS transmission occasion=a moment value of the end position of the measurement occasion-a moment value of the start position of the third SPS transmission occasion.

In this embodiment, the terminal and/or the access network device may determine a time domain position of the fourth SPS transmission occasion based on the time domain position of the third SPS transmission occasion and the time difference between the end position of the measurement occasion and the start position of the third SPS transmission occasion. For example, the moment value of the start position of the third SPS transmission occasion and the difference between the moment value of the end position of the measurement occasion and the moment value of the start position of the third SPS transmission occasion are summed, to obtain a moment value of a start position of the fourth SPS transmission occasion.

In addition, the time domain position of the fourth SPS transmission occasion may alternatively be determined with reference to the foregoing two embodiments. For example, if the time domain position of the SPS transmission occasion determined by the terminal and/or the access network device based on the time domain position of the third SPS transmission occasion and the time difference between the end position of the measurement occasion and the start position of the third SPS transmission occasion still overlaps the time domain position of the measurement occasion, a time domain position of a finally used fourth SPS transmission occasion may be determined based on the end position of the measurement occasion.

In another embodiment, the time interval between the fourth SPS transmission occasion and the third SPS transmission occasion may be the fixed length of the measurement occasion. For example, in this embodiment, the terminal and/or the access network device may sum the moment value of the start position of the third SPS transmission occasion and a length value of the measurement occasion to obtain a moment value of a start position of the fourth SPS transmission occasion.

It can be learned that, based on the procedure shown in the figure, in the communication method provided in this application, the terminal and the access network device may perform transmission of the downlink information on the fourth SPS transmission occasion when the third SPS transmission occasion overlaps the measurement occasion in time domain. The time interval between the fourth SPS transmission occasion and the third SPS transmission occasion may be determined based on the length or the end position of the measurement occasion. Therefore, when the third SPS transmission occasion overlaps the measurement occasion in time domain, the transmission of the downlink information may be performed in a timely manner on the fourth SPS transmission occasion, to reduce a service transmission delay.

A difference between the procedure shown in FIG. 7 and the procedure shown in FIG. 6 lies in that, in S401, the fifth configuration information does not need to carry a time domain offset of the time interval between the third SPS transmission occasion and the fourth SPS transmission occasion; and correspondingly, the time domain position of the fourth SPS transmission occasion may be determined based on the time domain position of the third SPS transmission occasion and the length or the end position of the measurement occasion. Compared with the method shown in FIG. 6, this manner can reduce complexity of a configuration process and reduce signaling overheads.

Similar to the embodiment of S102, in an optional embodiment of S402, if the third SPS transmission occasion includes N4 SPS transmission occasions, and N4 is a positive integer greater than 1, the terminal may send the downlink information to the access network device on the fourth SPS transmission occasion when at least K4 transmission occasions (which may alternatively be replaced with more than K4 transmission occasions) in the N4 SPS transmission occasions overlap the measurement occasion in time domain. Correspondingly, the access network device may receive, on the fourth SPS transmission occasion, the downlink information sent by the terminal when the at least K4 transmission occasions in the N4 SPS transmission occasions overlap the measurement occasion in time domain. In this embodiment, K4 may be used as a threshold condition for triggering execution of S402, that is, the downlink information is sent on the fourth SPS transmission occasion only when no fewer than at least K4 transmission occasions overlap the measurement occasion in time domain. The method in this application may not be used in transmission of a low-priority logical channel, to reduce complexity, and preferentially ensure transmission performance of a service with high importance when resources are limited.

In this embodiment, the fifth configuration information may be further used to configure K4, for example, configure a value of K4. Alternatively, the fifth configuration information may be further used to configure a proportion of the K4 SPS transmission occasions in the N4 SPS transmission occasions. In addition, it is not excluded that the access network device configures K4 or the foregoing proportion by using information or a message other than the fifth configuration information, for example, RRC signaling, a MAC CE, or DCI. Alternatively, K4 or the foregoing proportion may be preconfigured in the terminal and/or the access network device through a protocol, factory configuration, or the like.

In another embodiment of S402, the downlink information sent by the terminal device to the access network device may be carried on a high-priority logical channel. In other words, if the downlink information is carried on the low-priority logical channel, the downlink information may be sent while the method shown in this application is ignored. Refer to the descriptions of S 102. A priority of the logical channel may be determined based on a value of a priority field.

It may be understood that, to implement functions in the foregoing embodiments, the access network device and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

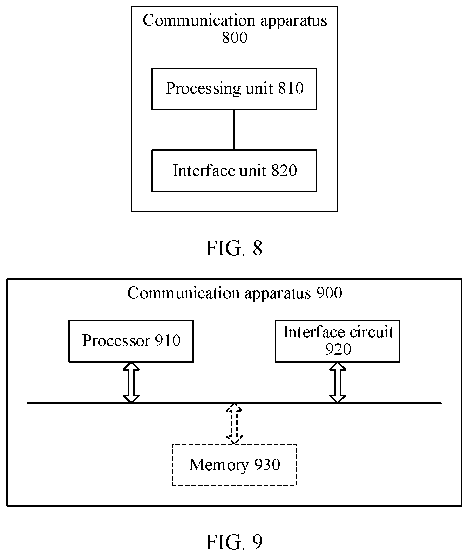

FIG. 8 and FIG. 9 are diagrams of structures of possible communication apparatuses according to an embodiment of this application. The communication apparatuses may be configured to implement functions of the terminal device or the access network device in the foregoing method embodiments. Therefore, the beneficial effects of the foregoing method embodiments can also be achieved. In embodiments of this application, the communication apparatus may be one of the terminals 120a to 120j shown in FIG. 1, may be the access network device 110a or 110b shown in FIG. 1, or may be a module (for example, a chip) used in the terminal or the access network device.

As shown in FIG. 8, a communication apparatus 800 includes a processing unit 810 and an interface unit 820. The communication apparatus 800 is configured to implement a function of the terminal or the access network device in the method embodiment shown in any one of FIG. 3 and FIG. 5 to FIG. 7.

For example, when the communication apparatus 800 is configured to implement the function of the terminal in the method embodiment shown in FIG. 3, the interface unit 820 may be configured to: receive first configuration information and second configuration information; and when a first CG transmission occasion overlaps a measurement occasion in time domain, send uplink information to an access network device on a second CG transmission occasion. When the communication apparatus 800 is configured to implement the function of the access network device in the method embodiment shown in FIG. 3, the interface unit 820 may be configured to: send first configuration information and second configuration information to a terminal; and configured to: when a first CG transmission occasion overlaps a measurement occasion in time domain, receive, on a second CG transmission occasion, uplink information sent by the terminal.

For another example, when the communication apparatus 800 is configured to implement the function of the terminal in the method embodiment shown in FIG. 5, the interface unit 820 may be configured to: receive third configuration information and second configuration information; and when a third CG transmission occasion overlaps a measurement occasion in time domain, send uplink information to an access network device on a fourth CG transmission occasion. Optionally, the processing unit 810 may be configured to determine the fourth CG transmission occasion. When the communication apparatus 800 is configured to implement the function of the access network device in the method embodiment shown in FIG. 5, the interface unit 820 may be configured to: send third configuration information and second configuration information to a terminal; and configured to: when a third CG transmission occasion overlaps a measurement occasion in time domain, receive, on a fourth CG transmission occasion, uplink information sent by the terminal. Optionally, the processing unit 810 may be configured to determine the fourth CG transmission occasion.

For another example, when the communication apparatus 800 is configured to implement the function of the terminal in the method embodiment shown in FIG. 6, the interface unit 820 may be configured to: receive fourth configuration information and second configuration information; and when a first SPS transmission occasion overlaps a measurement occasion in time domain, receive downlink information from an access network device on a second SPS transmission occasion. When the communication apparatus 800 is configured to implement the function of the access network device in the method embodiment shown in FIG. 6, the interface unit 820 may be configured to: send fourth configuration information and second configuration information to a terminal; and when a first SPS transmission occasion overlaps a measurement occasion in time domain, send downlink information to the terminal on a second SPS transmission occasion.

For another example, when the communication apparatus 800 is configured to implement the function of the terminal in the method embodiment shown in FIG. 7, the interface unit 820 may be configured to: receive fifth configuration information and second configuration information; and when a third SPS transmission occasion overlaps a measurement occasion in time domain, receive downlink information from an access network device on a fourth SPS transmission occasion. Optionally, the processing unit 810 may be configured to determine the fourth SPS transmission occasion. When the communication apparatus 800 is configured to implement the function of the access network device in the method embodiment shown in FIG. 5, the interface unit 820 may be configured to: send fifth configuration information and second configuration information to a terminal; and when a third SPS transmission occasion overlaps a measurement occasion in time domain, send downlink information to the terminal on a fourth SPS transmission occasion. Optionally, the processing unit 810 may be configured to determine the fourth SPS transmission occasion.

For more detailed descriptions of the processing unit 810 and the interface unit 820, refer to related descriptions in the method embodiment shown in any one of FIG. 3 and FIG. 5 to FIG. 7.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs the instructions.

When the communication apparatus 900 is configured to implement the method shown in any one of FIG. 3 and FIG. 5 to FIG. 7, the processor 910 is configured to implement a function of the foregoing processing unit 810, and the interface circuit 920 is configured to implement a function of the foregoing interface unit 820.

When the communication apparatus is a chip used in a terminal, the chip implements functions of the terminal in the foregoing method embodiments. The chip receives, through another module (for example, a radio frequency module or an antenna) in the terminal, information sent by an access network device to the terminal; or the chip sends information to another module (for example, a radio frequency module or an antenna) in the terminal, where the information is sent by the terminal to an access network device.

When the communication apparatus is a module used in the access network device, the module in the access network device implements functions of the access network device in the foregoing method embodiments. The module in the access network device receives information from another module (for example, a radio frequency module or an antenna) in the access network device, where the information is sent by a terminal device to the access network device; or the module in the access network device sends information to another module (for example, a radio frequency module or an antenna) in the access network device, where the information is sent by the access network device to a terminal device. The access network device module herein may be a baseband chip, may be a CU, a DU, or another module, or may be an apparatus in an O-RAN architecture, for example, an apparatus like an open CU or an open DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or an O-RAN. The processor and the storage medium may alternatively exist as discrete components in the access network device or the O-RAN.

An embodiment of this application further provides a computer-readable storage medium. The computer-readable storage medium stores instructions, and the instructions may also be referred to as a computer program, computer program code, or the like. The instructions are run on a computer, to enable the computer to perform the method shown in any one of FIG. 3 and FIG. 5 to FIG. 7 in the foregoing method embodiments and the method shown in embodiments of this application.

An embodiment of this application further provides a computer program product, including a computer program or instructions. When the computer program or the instructions are run on a computer, the method shown in any one of FIG. 3 and FIG. 5 to FIG. 7 and the method shown in embodiments of this application are implemented.

An embodiment of this application further provides a chip. The chip includes a processor, the processor is coupled to a memory, and the processor is configured to execute a computer program or instructions stored in the memory, to enable the method shown in any one of FIG. 3 and FIG. 5 to FIG. 7 and the method shown in embodiments of this application to be implemented. For example, an example in which the chip implements a function of the access network device is used. The chip may receive information from another module (for example, a radio frequency or an antenna) in the access network device, and the information may be sent by a terminal to the access network device. Alternatively, the chip may send information to another module (for example, a radio frequency or an antenna) in the access network device. The information is sent by the access network device to a terminal.

An embodiment of this application further provides a communication system, including a first communication apparatus and a second communication apparatus. The first communication apparatus and the second communication apparatus may be respectively configured to implement functions of the terminal and the access network device in this application.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

   receiving first configuration information and second configuration information from an access network device, wherein the first configuration information is used to configure a first configured grant CG transmission occasion and a first time offset, the second configuration information is used to configure a measurement occasion, and the measurement occasion is used for inter-frequency measurement; and
   when the first CG transmission occasion overlaps the measurement occasion in time domain, sending uplink information to the access network device on a second CG transmission occasion, wherein a time interval between the second CG transmission occasion and the first CG transmission occasion is equal to the first time offset.

2. A communication method, comprising:

sending first configuration information and second configuration information to a terminal device, wherein the first configuration information is used to configure a first configured grant CG transmission occasion and a first time offset, the second configuration information is used to configure a measurement occasion, and the measurement occasion is used for inter-frequency measurement; and

when the first CG transmission occasion overlaps the measurement occasion in time domain, receiving uplink information from the terminal device on a second CG transmission occasion, wherein a time interval between the second CG transmission occasion and the first CG transmission occasion is equal to the first time offset.

3. The method according to claim 1 or 2, wherein a length of the first time offset is greater than or equal to a length of the measurement occasion; and/or
the length of the first time offset is less than or equal to a length of a time interval between an end position of a CG periodicity time period that the first CG transmission occasion is in and an end position of the first CG transmission occasion.

4. The method according to any one of claims 1 to 3, wherein the first CG transmission occasion comprises N1 CG transmission occasions, and N1 is a positive integer greater than 1; and
at least K1 CG transmission occasions in the first CG transmission occasion overlap the measurement occasion in time domain.

5. The method according to claim 4, wherein the first configuration information is further used to configure K1 or a proportion of the K1 CG transmission occasions in the N1 CG transmission occasions.

6. The method according to any one of claims 1 to 5, wherein a logical channel used to carry the uplink information is a high-priority logical channel.

7. A communication method, comprising:

receiving third configuration information and second configuration information from an access network device, wherein the third configuration information is used to configure a third CG transmission occasion, the second configuration information is used to configure a measurement occasion, and the measurement occasion is used for inter-frequency measurement; and
when the third CG transmission occasion overlaps the measurement occasion in time domain, sending uplink information to the access network device on a fourth CG transmission occasion, wherein a time interval between the fourth CG transmission occasion and the third CG transmission occasion is related to a length or an end position of the measurement occasion.

8. A communication method, comprising:

sending third configuration information and second configuration information to a terminal device, wherein the third configuration information is used to configure a third CG transmission occasion, the second configuration information is used to configure a measurement occasion, and the measurement occasion is used for inter-frequency measurement; and
when the third CG transmission occasion overlaps the measurement occasion in time domain, receiving, by an access network device, uplink information from the terminal device on a fourth CG transmission occasion, wherein a time interval between the fourth CG transmission occasion and the third CG transmission occasion is related to a length or an end position of the measurement occasion.

9. The method according to claim 7 or 8, wherein the third CG transmission occasion and the fourth CG transmission occasion are in a same CG periodicity time period.

10. The method according to any one of claims 7 to 9, wherein a start position of the fourth CG transmission occasion is related to a time interval between the end position of the measurement occasion and a start position of the third CG transmission occasion; or
the start position of the fourth CG transmission occasion is related to the end position of the measurement occasion.

11. The method according to any one of claims 7 to 10, wherein a length of the time interval is greater than or equal to the length of the measurement occasion; and/or
the length of the time interval is less than or equal to a length of a time interval between an end position of the CG periodicity time period that the third CG transmission occasion is in and an end position of the third CG transmission occasion.

12. The method according to any one of claims 7 to 11, wherein the third CG transmission occasion comprises N2 CG transmission occasions, and N2 is a positive integer greater than 1; and
at least K2 CG transmission occasions in the third CG transmission occasion overlap the measurement occasion in time domain.

13. The method according to claim 12, wherein the third configuration information is further used to configure K2 or a proportion of the K2 CG transmission occasions in the N2 CG transmission occasions.

14. The method according to any one of claims 7 to 13, wherein a logical channel used to carry the uplink information is a high-priority logical channel.

15. A communication method, comprising:

receiving fourth configuration information and second configuration information from an access network device, wherein the fourth configuration information is used to configure a first semi-persistent scheduling SPS transmission occasion and a second time offset, the second configuration information is used to configure a measurement occasion, and the measurement occasion is used for inter-frequency measurement; and
when the first SPS transmission occasion overlaps the measurement occasion in time domain, receiving downlink information from the access network device on a second SPS transmission occasion, wherein a time interval between the second SPS transmission occasion and the first SPS transmission occasion is equal to the second time offset.

16. A communication method, comprising:

sending fourth configuration information and second configuration information to a terminal device, wherein the fourth configuration information is used to configure a first semi-persistent scheduling SPS transmission occasion and a second time offset, the second configuration information is used to configure a measurement occasion, and the measurement occasion is used for inter-frequency measurement; and
when the first SPS transmission occasion overlaps the measurement occasion in time domain, an access network device may send downlink information to the terminal device on a second SPS transmission occasion, wherein a time interval between the second SPS transmission occasion and the first SPS transmission occasion is equal to the second time offset.

17. The method according to claim 15 or 16, wherein a length of the second time offset is greater than or equal to a length of the measurement occasion; and/or
the length of the second time offset is less than or equal to a length of a time interval between an end position of an SPS periodicity time period that the first SPS transmission occasion is in and an end position of the first SPS transmission occasion.

18. The method according to any one of claims 15 to 17, wherein the first SPS transmission occasion comprises N3 SPS transmission occasions, and N3 is a positive integer greater than 1; and
at least K3 SPS transmission occasions in the first SPS transmission occasion overlap the measurement occasion in time domain.

19. The method according to claim 18, wherein the first configuration information is further used to configure K3 or a proportion of the K3 SPS transmission occasions in the N3 SPS transmission occasions.

20. The method according to any one of claims 15 to 19, wherein a logical channel used to carry the downlink information is a high-priority logical channel.

21. A communication method, comprising:

receiving fifth configuration information and second configuration information from an access network device, wherein the third configuration information is used to configure a third SPS transmission occasion, the second configuration information is used to configure a measurement occasion, and the measurement occasion is used for inter-frequency measurement; and
when the third SPS transmission occasion overlaps the measurement occasion in time domain, receiving downlink information from the access network device on a fourth SPS transmission occasion, wherein a time interval between the fourth SPS transmission occasion and the third SPS transmission occasion is related to a length or an end position of the measurement occasion.

22. A communication method, comprising:

sending fifth configuration information and second configuration information to a terminal device, wherein the third configuration information is used to configure a third SPS transmission occasion, the second configuration information is used to configure a measurement occasion, and the measurement occasion is used for inter-frequency measurement; and
when the third SPS transmission occasion overlaps the measurement occasion in time domain, an access network device may send downlink information to the terminal device on a fourth SPS transmission occasion, wherein a time interval between the fourth SPS transmission occasion and the third SPS transmission occasion is related to a length or an end position of the measurement occasion.

23. The method according to claim 21 or 22, wherein the third SPS transmission occasion and the fourth SPS transmission occasion are in a same SPS periodicity time period.

24. The method according to any one of claims 21 to 23, wherein a start position of the fourth SPS transmission occasion is related to a time interval between the end position of the measurement occasion and a start position of the third SPS transmission occasion; or
the start position of the fourth SPS transmission occasion is related to the end position of the measurement occasion.

25. The method according to any one of claims 21 to 24, wherein a length of the time interval is greater than or equal to the length of the measurement occasion; and/or
the length of the time interval is less than or equal to a length of a time interval between an end position of the SPS periodicity time period that the third SPS transmission occasion is in and an end position of the third SPS transmission occasion.

26. The method according to any one of claims 21 to 25, wherein the third SPS transmission occasion comprises N4 SPS transmission occasions, and N4 is a positive integer greater than 1; and
at least K4 SPS transmission occasions in the third SPS transmission occasion overlap the measurement occasion in time domain.

27. The method according to claim 26, wherein the third configuration information is further used to configure K4 or a proportion of the K4 SPS transmission occasions in the N4 SPS transmission occasions.

28. The method according to any one of claims 21 to 27, wherein a logical channel used to carry the downlink information is a high-priority logical channel.

29. A communication apparatus, comprising a unit or a module configured to perform the method according to any one of claim 1 and claims 3 to 6;

comprising a unit or a module configured to perform the method according to any one of claim 7 and claims 9 to 14;
comprising a unit or a module configured to perform the method according to any one of claim 15 and claims 17 to 20; or
comprising a unit or a module configured to perform the method according to any one of claim 21 and claims 23 to 28.

30. A communication apparatus, comprising a unit or a module configured to perform the method according to any one of claims 2 to 6;

comprising a unit or a module configured to perform the method according to any one of claims 8 to 14;
comprising a unit or a module configured to perform the method according to any one of claims 16 to 20; or
comprising a unit or a module configured to perform the method according to any one of claims 22 to 28.

**31.** A communication apparatus, comprising a processor, wherein the processor is configured to execute instructions, to enable the apparatus to perform the method according to any one of claim 1 and claims 3 to 6, or to enable the apparatus to perform the method according to any one of claim 7 and claims 9 to 14, or to enable the apparatus to perform the method according to any one of claim 15 and claims 17 to 20, or to enable the apparatus to perform the method according to any one of claim 21 and claims 23 to 28.

**32.** A communication apparatus, comprising a processor, wherein the processor is configured to execute instructions, to enable the apparatus to perform the method according to any one of claims 2 to 6, or to enable the apparatus to perform the method according to any one of claims 8 to 14, or to enable the apparatus to perform the method according to any one of claims 16 to 20, or to enable the apparatus to perform the method according to any one of claims 22 to 28.

**33.** A computer-readable storage medium, wherein the computer-readable storage medium stores instructions, and the instructions are run on a computer, to enable the computer to perform the method according to any one of claims 1 to 28.

**34.** A computer program product, comprising a computer program or instructions, wherein when the computer program or the instructions are run by an apparatus, the method according to any one of claims 1 to 28 is performed.

FIG. 1

FIG. 2

| Access network device | | Terminal |

S101: First configuration information and second configuration information, where the first configuration information is used to configure a first CG transmission occasion and a first time offset, and the second configuration information is used to configure a measurement occasion

S102: When the first CG transmission occasion overlaps the measurement occasion in time domain, send uplink information on a second CG transmission occasion, where a time interval between the second CG transmission occasion and the first CG transmission occasion is equal to the first time offset

FIG. 3

Measurement occasion MGL=6 ms

Measurement occasion

MGRP=40 ms

First CG transmission occasion

First time offset

First time offset

FIG. 4a

FIG. 4b

FIG. 5

```
┌──────────────┐                              ┌──────────┐
│Access network│                              │ Terminal │
│   device     │                              │          │
└──────┬───────┘                              └────┬─────┘
       │   S301: Fourth configuration               │
       │ information and second configuration        │
       │  information, where the fourth              │
       │ configuration information is used to        │
       │  configure a first SPS transmission         │
       │ occasion and a second time offset, and      │
       │  the second configuration information       │
       │  is used to configure a measurement         │
       │              occasion                       │
       ├────────────────────────────────────────────▶│
       │                                             │
       │   S302: When the first SPS                  │
       │  transmission occasion overlaps the         │
       │   measurement occasion in time              │
       │  domain, send downlink information          │
       │  on a second SPS transmission               │
       │  occasion, where a time interval            │
       │ between the second SPS transmission         │
       │    occasion and the first SPS               │
       │  transmission occasion is equal to the      │
       │         second time offset                  │
       ├────────────────────────────────────────────▶│
       │                                             │
```

FIG. 6

```
┌──────────────┐                              ┌──────────┐
│Access network│                              │ Terminal │
│   device     │                              │          │
└──────┬───────┘                              └────┬─────┘
       │  S401: Fifth configuration information      │
       │ and second configuration information,       │
       │   where the fifth configuration             │
       │  information is used to configure a          │
       │ third SPS transmission occasion, and         │
       │  the second configuration information        │
       │  is used to configure a measurement          │
       │              occasion                        │
       ├─────────────────────────────────────────────▶│
       │                                              │
       │    S402: When the third SPS                  │
       │  transmission occasion overlaps the          │
       │    measurement occasion in time              │
       │  domain, send downlink information           │
       │  on a fourth SPS transmission                │
       │  occasion, where a time interval             │
       │ between the fourth SPS transmission          │
       │   occasion and the third SPS                 │
       │ transmission occasion is related to a        │
       │  length or an end position of the            │
       │       measurement occasion                   │
       ├─────────────────────────────────────────────▶│
       │                                              │
```

FIG. 7

Communication apparatus
800

Processing unit 810

Interface unit 820

FIG. 8

Communication apparatus 900

Processor 910

Interface circuit
920

Memory 930

FIG. 9

## INTERNATIONAL SEARCH REPORT

| International application No. |
| --- |
| **PCT/CN2024/125057** |

**A. CLASSIFICATION OF SUBJECT MATTER**

H04W 24/08(2009.01)i; H04W 24/04(2009.01)i; H04W 72/1268(2023.01)i; H04W 72/21 (2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, 3GPP, CJFD: 测量时机, 传输时机, 寻呼时机, 冲突, 重叠, 上行, 下行, 授权, measurement occasion, measurement gap, MG, transmission occasion, paging occasion, PO, collision, overlap, uplink, downlink, ConfiguredGrant, CG, SPS

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022052094 A1 (SHENZHEN TRANSSION HOLDINGS CO., LTD.) 17 March 2022 (2022-03-17)<br>    description, page 10, line 24 to page 16, line 16, and page 20, line 29 to page 21, line 29, and figures 5-13 | 1-34 |
| A | CN 102938903 A (ZTE CORP.) 20 February 2013 (2013-02-20)<br>    entire document | 1-34 |
| A | CN 103249058 A (ZTE CORP.) 14 August 2013 (2013-08-14)<br>    entire document | 1-34 |
| A | US 2022078650 A1 (LG ELECTRONICS INC.) 10 March 2022 (2022-03-10)<br>    entire document | 1-34 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 January 2025** | **13 January 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/125057**

| Patent document cited in search report | | | Publication date (day/month/year) | Patent family member(s) | | | Publication date (day/month/year) |
|---|---|---|---|---|---|---|---|
| WO | 2022052094 | A1 | 17 March 2022 | CN | 116210331 | A | 02 June 2023 |
| CN | 102938903 | A | 20 February 2013 | WO | 2013167017 | A1 | 14 November 2013 |
| CN | 103249058 | A | 14 August 2013 | None | | | |
| US | 2022078650 | A1 | 10 March 2022 | WO | 2020122617 | A1 | 18 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311435808